# EUROPEAN PATENT APPLICATION

(11) **EP 4 831 841 A1**
(43) Date of publication of application: **28.10.2026**
(21) Application number: 25382423.9
(22) Date of filing: 25.04.2025
(51) Int. Cl.: G06F 18/23, G06V 10/762, G06V 40/16

(54) **SYSTEM AND METHODS FOR AUTOMATIC CLASIFICATION OF BIOLOGICAL SIGNALS OR EXPRESSIONS**

(71) Applicant: Universidad de Granada, 18071 Granada (ES)
(72) Inventor: GONZÁLEZ CANO, Rafael, 18016 Granada (ES); COBOS DEL MORAL, Enrique José, 18016 Granada (ES); SANTOS CABALLERO, Miriam, 18016 Granada (ES); RICKERT LLÀCER, Aitana, 18016 Granada (ES); RUIZ CANTERO, María del Carmen, 18016 Granada (ES); TEJADA GIRÁLDEZ, Miguel Ángel, 18016 Granada (ES)
(74) Representative: Hoffmann Eitle

(57) **Abstract**

The present invention relates to a computer-implemented method for identifying biological signals or expressions, such as those related to pain or discomfort, in a plurality of human or animal individuals. The method comprises performing feature extraction on input data, said data comprising image, video, audio and/or physiological signals; reducing the dimensionality of the extracted features by means of a dimensionality reduction algorithm; and clustering the reduced-dimensional data using a clustering algorithm, preferably a non-supervised clustering algorithm. For each cluster obtained, the method further comprises computing the number of data points associated with each individual; determining a first representative value of the number of data points per individual for a group of individuals experiencing pain or discomfort, and a second representative value for a group of individuals in normal conditions or not experiencing pain or discomfort; computing a statistical measurement of dispersion in both groups; and evaluating the statistical significance of the comparison between the first and second representative values, taking into account the dispersion. Biological signals or expressions such as those related to pain or discomfort are identified by selecting clusters comprising a statistically significant difference between the groups.

## Description

### Technical field of the invention

The present invention belongs to the field of automated animal behaviour analysis, specifically within the area of computational methods for the assessment of animal welfare. More particularly, the invention relates to computer-implemented systems and methods for the automatic classification, and preferably detection and identification of pain-related facial expressions in animals using machine learning and unsupervised clustering techniques applied to image, video audio and/or other physiological signals or measurements.

### Background of the invention

The ability to reliably detect and assess pain in animals plays a crucial role in animal welfare, particularly within the context of experimental research, veterinary diagnostics, and animal production. Traditionally, pain assessment in animals has depended largely on manual observation of behavioural changes, including facial expressions, which are evaluated visually using standardized scales, such as grimace scales. Facial expressions are especially relevant indicators because they provide direct, non-invasive insights into the animal's emotional and physical state, making them a valuable resource for pain assessment in veterinary medicine and animal research.

Traditionally, methods for assessing pain through facial expressions in animals involve manual observation and subjective scoring by trained observers, frequently relying on standardized scales such as grimace scales. These methods often entail the manual selection of representative images or video frames, followed by a classification step wherein observers categorize the visual cues according to predefined criteria. Although widely used, this approach presents significant limitations. Manual selection of images introduces observer-related biases and inconsistencies, given the inherent subjectivity of human evaluators. This variability between observers reduces the reproducibility and reliability of pain assessments, limiting the comparability of results across studies.

Moreover, conventional classification methodologies based on manually curated image datasets lack adaptability. Classifiers trained on one particular strain or species, for instance, may not generalize well to animals with differing phenotypic characteristics, such as varying fur color or facial morphology. This limitation necessitates the development of multiple classifiers tailored specifically to each animal strain or species, significantly increasing the labor, time, and resources required.

Additionally, the manual selection process introduces inherent biases, influenced by individual observer experience, fatigue, and interpretation variability, thereby reducing the reproducibility and scientific robustness of experimental outcomes. Furthermore, the inherent subjectivity associated with manual classification diminishes the overall consistency and reliability of pain assessments, particularly when applied across different laboratories or research teams.

Moreover, existing approaches to facial expression analysis in animals typically lack robust statistical validation, limiting the confidence and reproducibility of conclusions drawn from the assessments. The subjective and manual nature of current classification methods also poses substantial challenges when attempting to process and analyse large volumes of video data efficiently, making it too cumbersome and time-consuming, highlighting their inadequacy for large-scale or automated applications.

There is, therefore, a clear and growing need within the field of animal welfare research for improved methods capable of objective and automated identification of facial expressions associated with pain in animals. Such a method should address the current shortcomings related to subjectivity, reproducibility, difficulty to implement or scalability, adaptability across species or phenotypes, and statistical robustness. The development of an automated solution that overcomes these limitations would significantly advance both research capabilities and animal welfare monitoring practices.

### Summary of the invention

The present invention addresses the limitations currently encountered in existing methods for identifying pain-related facial expressions in animals, offering a fully automated approach that significantly improves objectivity, reproducibility, and applicability across different animal strains and species.

The invention relates to a method for identifying biological signals or expressions related to physical, physiological or mental conditions, in a plurality of human or animal individuals. Additionally, it is related to a system that preferably comprises an enclosed receptacle, designed to hold animals-such as rodents-in a controlled position suitable for video recording. For example, it may have all walls black, to avoid attracting the attention of the animal, except one which is open, or transparent, and that allows to record the insides of the receptacle. The receptacle is thus preferably open on one side or comprises a transparent wall and is preferably arranged in such a way that animals naturally face toward this open side, thereby facilitating continuous and consistent capture of facial expressions. In preferred configurations, the enclosure incorporates means to acquire one or more images and/or video such as a camera and illumination sources, more preferably an infrared camera system equipped with infrared illumination sources, strategically positioned to uniformly illuminate the animals' faces without disturbing or causing behavioural alterations. The use of infrared illumination not only provides consistent image quality irrespective of laboratory lighting conditions but also reduces stress on animals, allowing more reliable and accurate recordings.

According to one or more embodiments of the invention, collected image or video data can be processed through a novel automated machine-learning pipeline, comprising several steps aimed at overcoming current limitations associated with manual and supervised methods. Initially, and preferably after extracting faces from video frames with a trained machine learning algorithm, which can be, for example, an out-of-the-shelf or general purpose facial-recognition algorithm, facial features are automatically extracted from said faces or a selection of video frames without requiring manual labelling or human input. This feature extraction can be performed using, for example, convolutional neural networks-such as ResNet-50-pretrained on large-scale image datasets to robustly identify facial landmarks (e.g., eyes, nose, ears). Alternative networks or architectures known in the art could similarly be employed, such as, but not limited to, EfficientNet, Inception or VGG-based models.

Following the extraction of facial features, the invention preferably employs a dimensionality reduction step, preferably through principal component analysis (PCA), although alternative dimensionality reduction techniques, such as, but not limited to, autoencoders, preferably variational autoencoders (VAEs), Uniform manifold approximation and projection (UMAP), Multidimensional Scaling (MDS), Linear discriminant analysis (LDA) or t-distributed stochastic neighbor embedding (t-SNE), may also be suitable. This reduction step simplifies data complexity, optimizing computational resources while maintaining critical facial-expression-related information.

The invention then preferably implements an unsupervised clustering algorithm, such as K-means clustering, to group images or video frames based on visual similarities. Clustering may be performed jointly on combined datasets of animals experiencing pain and those without pain, or alternatively, clustering may be executed separately for each dataset, with subsequent spatial or dimensional comparisons. Within each cluster or between corresponding clusters, statistical analysis is preferably conducted to identify significant differences in the distribution of frames originating from animals experiencing said conditions, such as pain, versus control animals not experiencing said conditions (animals without pain). Clusters showing statistically significant differences are identified as condition-related (i.e., pain-related) expressions. This innovative approach eliminates human bias and observer dependency, which are substantial drawbacks of existing methodologies.

Optionally, the method can also incorporate additional modalities beyond purely visual data, by leveraging multimodal machine learning methods that take as input not only images but also other types of input, such as, but not limited to, sound, depth or positional data, or frames before and/or after to identify movement, or any combination thereof. For instance, sound features-such as vocalizations or breathing patterns-can be extracted and similarly processed alongside visual features, providing complementary indicators of pain. Moreover, depth or three-dimensional positional information obtained through sensors like LiDAR or depth-sensing cameras could further enhance the accuracy and robustness of facial expression analysis. Additionally, the method can be extended to integrate movement estimation across frames using optical flow techniques, improving the identification of subtle facial movements indicative of pain.

Preferably, the system and/or method of the invention utilizes the spatial distribution of clusters identified during the unsupervised analysis step directly to classify new images or video frames. In this case, facial feature (or features from any other multimodal input above described) vectors extracted from new images or video frames can be projected into the previously defined reduced-dimensional space. The classification of pain-related expressions in this embodiment can thus be achieved by determining if these new data points belong to or lie near clusters previously identified as statistically indicative of pain. Therefore, pain determination in new animals is preferably performed directly based on proximity to the identified clusters, eliminating the need for an additional neural network classifier training step.

Alternatively, in some embodiments, once images exhibiting statistically significant patterns indicative of pain-related facial expressions are automatically identified and selected, these images may serve as the training dataset for a convolutional neural network, such as, but not limited to, Google's InceptionV3 or another suitable architecture. The resulting trained neural network can then autonomously analyse new images or video recordings, accurately identifying pain-related facial expressions in real-time or retrospectively, without manual intervention.

In summary, the present invention provides a fully automated and statistically validated approach for training neural networks to identify pain-related facial expressions. Advantageously it allows elimination of manual image selection biases, enhanced reproducibility of results across different observers and institutions, and increased adaptability across diverse animal species and experimental conditions. Consequently, the invention significantly reduces labour-intensive processes, accelerates data analysis workflows, and improves the reliability and consistency of animal welfare assessments.

A first aspect of the invention refers to a computer implemented method for identifying biological signals or expressions, preferably pain or discomfort-related biological signals or expressions, in a plurality of human or animal individuals, wherein said plurality of individuals comprise a first group comprising one or more individuals experiencing pain or discomfort and a second group comprising one or more individuals in normal conditions or not experiencing pain or discomfort. The method comprises the steps of performing feature extraction on input data, the input data comprising image, video, audio and/or physiological signals; reducing the dimensionality of data associated to the extracted features in the previous step with a dimensionality reduction algorithm; clustering the data with a clustering algorithm, preferably with a non-supervised clustering algorithm; for each cluster obtained, computing the number of data points associated to each individual; computing a first representative value of the number of data points per individual associated to the first group, and a second representative value of the number of data points per individual associated to the second group; computing a statistical measurement of data point dispersion in the first and second representative values; comparing the first and second representative values associated to the first and second groups, evaluating the statistical significance of said comparison by taking into consideration the dispersion computed in the previous step; and identifying pain or discomfort-related biological signals or expressions by selecting clusters that comprise a statistically significant difference between the first and second representative values.

According to a preferred aspect of the first aspect of the invention, the clustering is made a plurality of iterations, preferably each iteration for a different number of clusters.

According to a preferred aspect of the first aspect of the invention, the input data comprises one or more images and/or video, and the features extracted preferably comprise facial features.

According to a preferred aspect of the first aspect of the invention, the input data comprises animal-generated sounds, and the features extracted preferably comprise animal-generated sound features.

A second aspect of the invention refers to a computer implemented method for training a machine learning algorithm for classifying biological signals or expressions as pain or discomfort-related, comprising the steps of identifying pain or discomfort-related biological signals or expressions in a plurality of human or animal individuals according to any one of the previous aspects, and training a machine learning algorithm with data associated to the pain or discomfort-related biological signals or expressions identified.

A third aspect of the invention refers to a computer implemented method for classifying biological signals or expressions as pain or discomfort-related, or not pain nor discomfort-related, comprising the steps of training a machine learning algorithm for classifying biological signals or expressions as pain or discomfort-related according to the second aspect of the invention, and providing new input data comprising image, video, audio and/or physiological signals to the machine learning algorithm trained for classification. Wherein preferably said machine learning algorithm trained for classification classifies said new input data as pain or discomfort-related, or as not pain nor discomfort-related.

A fourth aspect of the invention refers to a computer implemented method for classifying biological signals or expressions as pain or discomfort-related or not pain or discomfort-related, comprising the steps of identifying pain or discomfort-related biological signals or expressions in a plurality of human or animal individuals according to any one of the first aspect or its preferred aspects; performing feature extraction on new input data, the new input data comprising image, video, audio and/or physiological signals; reducing the dimensionality of data associated to the extracted features with a dimensionality reduction algorithm; and classifying the new input data as pain or discomfort-related or not pain or discomfort-related as a function of a measure of distance between the dimensionality-reduced data and a representative point of one or more clusters that comprise a statistically significant difference in the number of data points associated to an individual experiencing pain or discomfort and the number of data points associated to an individual in normal conditions or not experiencing pain or discomfort.

A fifth aspect of the invention refers to a computer program comprising instructions which, when the program is executed by a computer, cause the computer to carry out the method of any one of the previous aspects.

A sixth aspect of the invention refers to a computer readable storage medium comprising instructions that, when executed by a computer, cause said computer to carry out the method of any one of the previous aspects.

A seventh aspect of the invention refers to a system comprising a processing unit in communication with a memory, the memory comprising instructions that, when executed by the processing unit, cause the system to carry out the method of any one of the previous aspects.

An eighth aspect of the invention refers to a system for automatic determination of pain or discomfort-related facial expressions comprising at least one receptacle suitable to fit an animal, wherein the receptacle comprises at least one lateral wall, a base, and, optionally, a top portion; means to acquire one or more images and/or video, such as a camera, preferably an infrared camera; at least one source of light, preferably infrared light; a processing unit in communication with a memory, the memory comprising instructions that, when executed by the processing unit, cause the system to carry out the method of any one of the previous aspects.

According to a preferred aspect of the eighth aspect of the invention, the means to acquire one or more images and/or video, preferably a camera, is positioned substantially horizontally with respect to the enclosed receptacle, preferably wherein its optical axis is positioned perpendicular to at least one of the lateral walls.

According to a preferred aspect of the eighth aspect of the invention, the receptacle further comprises a support structure, preferably a grid, positioned above the base and configured to support the animal while allowing animal waste to pass through towards the base, and/or the system comprises absorbent material, preferably sawdust, positioned on the base.

According to a preferred aspect of the eighth aspect of the invention, the system further comprises a microphone.

According to a preferred aspect of the eighth aspect of the invention, the system further comprises a LiDAR.

### Brief description of the drawings

To enable a better understanding of the present disclosure, and to show how the present disclosure may be carried out, reference will now be made, by way of example only, to the accompanying schematic drawings, wherein:

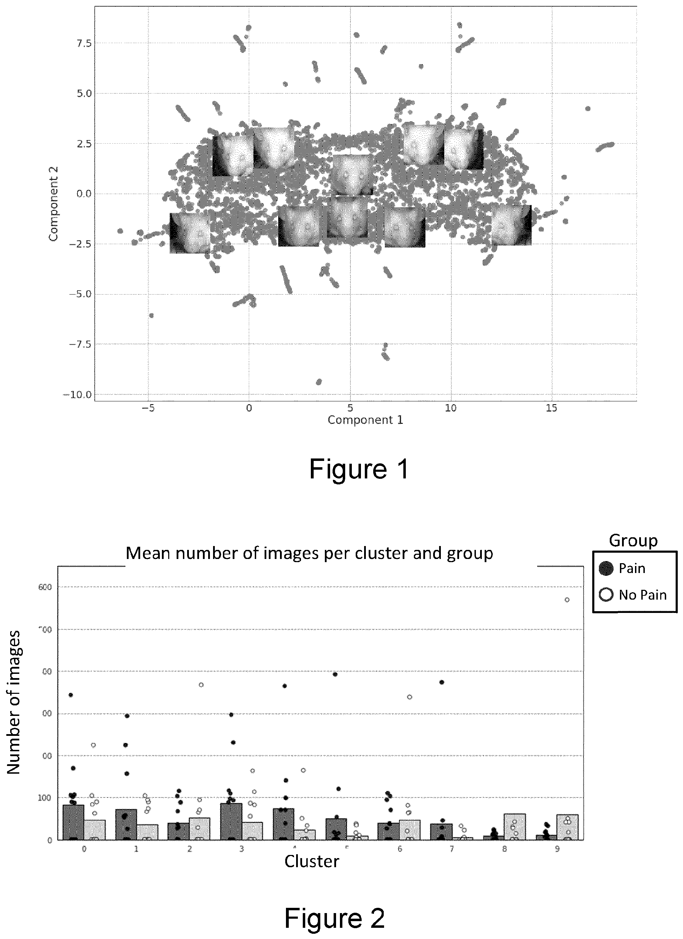

Figure 1 shows a representation of the latent space obtained using UMAP (unified manifold approximation and projection) from 10,566 frames corresponding to 12 mouse videos (7 with pain and 5 without pain), according to one or more embodiments of the invention. The visualisation illustrates the distribution of images projected onto two dimensions, with representative examples of frames included to aid interpretation of the space's structure.
Figure 2 shows a representation of mean values per cluster for animals with pain (dark bars) and without pain (light bars), according to one or more embodiments of the invention. The points over the bars indicate individual values (number of photograms) for each animal within the respective cluster. Clusters exhibiting significant differences between the two groups (pain vs. no pain) are presented. This example shows the distribution for 10 clusters; however, the analysis can be repeated varying the number of clusters from 10 to 200.

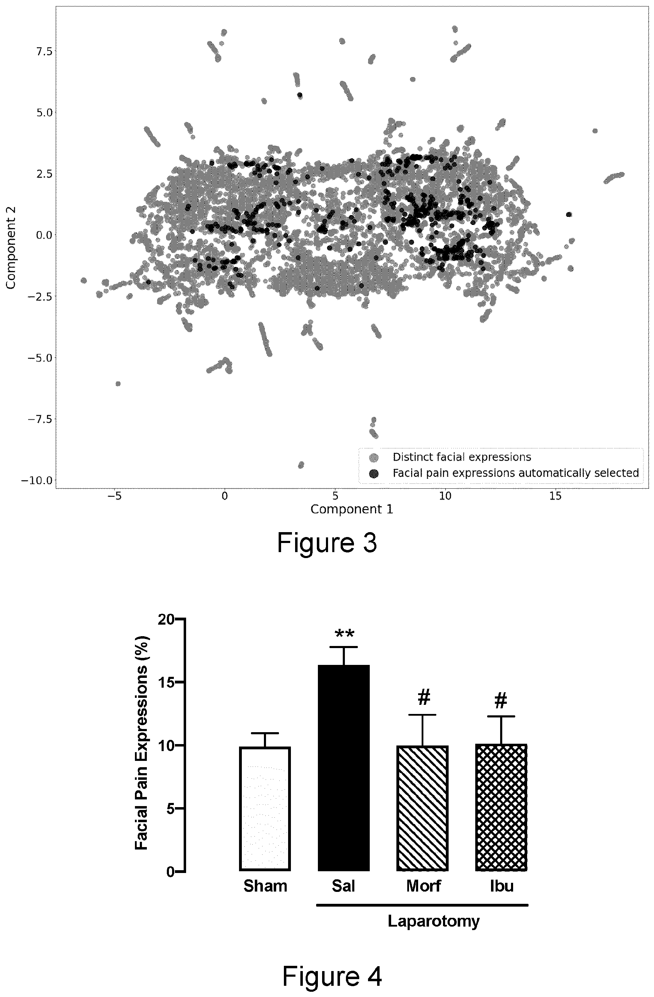

Figure 3 shows a representation of the latent space obtained using UMAP from 10,566 frames extracted from 12 mouse videos (7 with pain and 5 without pain). The black points indicate approximately 500 frames automatically selected by the model.
Figure 4 shows resting pain scores (% of facial pain expressions) in mice subjected to transverse laparotomy or sham procedure, following subcutaneous administration of morphine (Morf, 0.5 mg/kg), ibuprofen (Ibu, 32 mg/kg), or saline (Sal). Determinations were made using a classifier according to one or more embodiments of the invention in which images of animals with pain were automatically selected. Each bar and vertical line represent the mean ± standard error of the mean (SEM) obtained from 7 to 11 mice. Significant differences (p < 0.05) between sham-operated and laparotomised animals are indicated by (**), and between laparotomised animals treated with saline versus reference analgesics by (#).

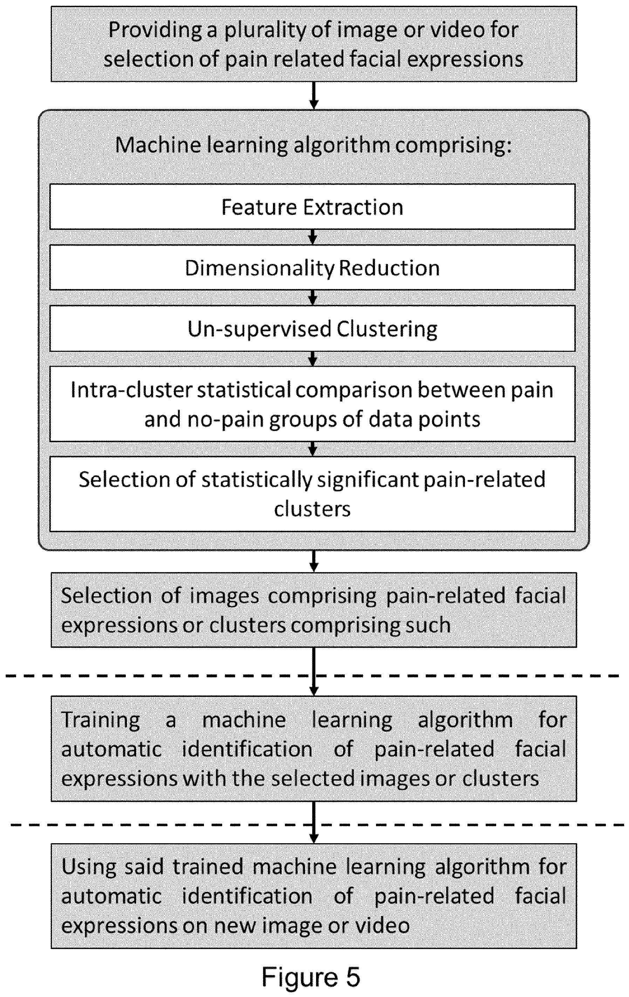

Figure 5 shows a schematic diagram of the workflow for selection of images or video photograms comprising pain related facial expressions according to one or more embodiments of the invention. Additionally, it shows the continuation of the workflow, consisting in training a machine learning algorithm for automatic identification of pain-related facial expressions with the selected images or clusters. A further continuation of the algorithm, shown schematically in figure 5, shows using said trained machine learning algorithm for automatic identification of pain-related facial expressions on new image or video.

### Description of the invention

### Definitions

As used herein, "a" or "an" means "at least one" or "one or more."

It is noted that the term "about", if used herein, refers to +/- 30%, preferably +/- 20%, preferably +/- 15%, more preferably +/- 10%, of the indicated referred value. It may also refer to the exact value, that is, +/- 0% or +/- the standard measurement error. Also, any quantity, composition percentages and/or dimension mentioned herein is understood to present an error of +/- 30%, preferably +/- 20%, preferably +/- 15%, more preferably +/- 10%, more preferably +/- 5% or +/-0% of the indicated value. It may also refer to the exact value, that is, +/- 0% or +/- the standard measurement error.

As used herein, the conjunctive term "and/or" between multiple recited elements is understood as encompassing both individual and combined options. For instance, where two elements are conjoined by "and/or", a first option refers to the applicability of the first element without the second. A second option refers to the applicability of the second element without the first. A third option refers to the applicability of the first and second elements together.

When used herein the term "comprising" can be substituted with the term "containing" or "including" or sometimes when used herein with the term "having".

When used herein "consisting of" excludes any element, step, or ingredient not specified in the claim element. When used herein, "consisting essentially of" does not exclude materials or steps that do not materially affect the basic and novel characteristics of the claim.

Unless defined otherwise, all technical and scientific terms used herein have the same meaning as is commonly understood by one of ordinary skill in the art to which this invention belongs. All patents, applications, published applications and other publications referred to herein are incorporated by reference in their entirety. If a definition set forth in this section is contrary to or otherwise inconsistent with a definition set forth in applications, published applications and other publications that are herein incorporated by reference, the definition set forth in this section prevails over the definition that is incorporated herein by reference.

The term "pain-related facial expressions", in the context of the invention, refers broadly to facial movements, muscle contractions, or facial configurations exhibited by animals, preferably laboratory animals such as, but not limited to, rodents (e.g., mice, rats, guinea pigs), associated with experiencing pain or discomfort. Pain in this context may originate from various sources including but not limited to surgical procedures (such as laparotomy, incision, biopsy), administration of chemical irritants (e.g., capsaicin, formalin), inflammatory substances, drugs, or medical treatments intended to induce pain for experimental studies. Thus, the identification of pain-related facial expressions may enable, for instance, the evaluation of analgesic efficacy, the validation of pain models, or monitoring the welfare of laboratory animals, preferably rodents such as mice or laboratory rats, although the invention could equally apply to other laboratory animals (e.g., rabbits, guinea pigs, hamsters), domesticated animals (e.g., dogs, cats), livestock (e.g., cows, sheep, pigs), or even wildlife under controlled settings.

The term "facial feature extraction", in the context of the invention, refers to the computational identification, localization, and quantification of anatomical landmarks or regions on an animal's face from image or video data. Such facial features may include, but are not limited to, the position, size, shape, orientation, spacing, relative positioning, or movement patterns of specific facial components such as the eyes, eyelids, whiskers, ears, cheeks, nose, mouth, jaw, and any other facial anatomical structures. The extracted facial features may also include in some embodiments temporal changes between consecutive frames, enabling the analysis of dynamic facial movements associated with pain expressions. Facial feature extraction is typically performed using computational methods, preferably convolutional neural networks (CNNs) such as ResNet, EfficientNet, or alternative known architectures, although other suitable computer vision methods such as landmark detectors, shape models, optical flow algorithms, or geometric approaches could be employed in some embodiments of the invention.

The term "image and/or video data", in the context of the invention, refers to any recorded visual data comprising one or more static images (individual photographs, still frames) and/or continuous or segmented video sequences of one or more animals. It is understood that video may also be understood as a plurality of individual frames or images, preferably consecutive, taken, for example, by means to acquire one or more images and/or video. This data may originate from various types of image or video capture devices, including but not limited to digital cameras, infrared or thermal imaging cameras, depth sensors, webcams, and video surveillance systems. The data used in the invention may be unlabeled, partially labeled, or fully labeled, with labeling referring to the manual annotation of frames or images by human observers as indicative or non-indicative of pain-related facial expressions. Preferably, the data is unlabeled or minimally labeled, with labels corresponding only to general conditions-such as animals undergoing pain-inducing procedures versus control animals-rather than frame-by-frame annotations. Alternatively, the data may be unlabelled but comprised in different locations, allowing to differentiate between pain related and no-pain related images during processing. The method described herein is thus applicable to datasets unlabelled, partially labeled, or fully labeled, without departing from the scope of the invention. The term "image and/or video data" also explicitly encompasses datasets with varying frame rates, resolutions, or colour schemes, including grayscale, RGB, or colour conversion from infrared data. Preferably, the invention utilizes high-resolution infrared video data (e.g., resolutions around or exceeding 720p to 4K, such as 1440 × 1024 pixels), but it is not limited to such specifications. Frame rates may range typically from about 5 to about 120 frames per second, depending on the specific study design or the animal species under observation. Alternative data types, such as thermal imaging or multispectral imaging data, can also be incorporated into the feature extraction and analysis processes described herein. The term "image and/or video data", in a broader sense, may further include derived or pre-processed data, such as cropped or normalized facial regions, transformed image data (e.g., geometrically standardized, rotated, scaled, or aligned), or data pre-processed to facilitate feature extraction or enhance facial feature detection.

The term "dimensionality reduction", in the context of the invention, refers to mathematical or computational techniques used to simplify complex, high-dimensional data into a lower-dimensional representation while preserving essential features or characteristics. Preferably, dimensionality reduction includes Principal Component Analysis (PCA), but the invention also encompasses other known approaches such as, but not limited to, any type of autoencoders, i.e., Variational Autoencoders (VAEs), or t-distributed Stochastic Neighbor Embedding (t-SNE), Uniform Manifold Approximation and Projection (UMAP), Linear Discriminant Analysis (LDA), Generalized discriminant analysis (GDA), Non-negative matrix factorization (NMF), Kernel PCA, Graph-based kernel PCA or autoencoder-based methods. Dimensionality reduction may be applied separately or jointly to multiple modalities, including visual, acoustic, and/or depth information, individually or combined, thus optimizing computational efficiency and facilitating effective clustering and classification. In some embodiments, dimensionality reduction algorithms comprise multidimensional scaling (MDS) and/or, for example, other statistical techniques employed to visualize the relationships between objects in a multidimensional space.

The term "clustering", in the context of the invention, refers broadly to a computational grouping of data points into clusters based on intrinsic similarities or spatial proximity within a feature space. It is noted that said grouping of data points is generally carried out by an unsupervised algorithm, and, in the context of the invention, clustering preferably employs an unsupervised algorithm. Such grouping is preferably performed using clustering algorithms including, but not limited to, K-means, hierarchical clustering, Gaussian Mixture Models (GMM), DBSCAN, HDBSCAN, spectral clustering, or any other suitable clustering algorithm known in the art. According to the invention, the clustering procedure may comprise performing multiple distinct clusterings of the same dataset, each time varying the number of clusters-for example, but not limited to, performing separate clusterings with approximately 10, 20, 30, and continuing incrementally or otherwise up to about 50, 100 or 200 clusters or more. A group of these independent clusterings may be interpreted as an instance of "a clustering", according to some embodiments of the invention.

Statistical comparisons between animals experiencing pain and those not experiencing pain may subsequently be conducted within each clustering individually or across clusters identified from multiple such clusterings, preferably between clusterings labelled as pain related and clusters labelled as no pain related. It is further note that the concept "clustering" may also be understood as segmenting, grouping and/or partitioning data intro segments, groups or parts. For example, other techniques that allow an unsupervised grouping of data points based on the spatial relationship of said points would also be comprised in the concept "clustering" as is understood in the context of the invention.

The term "unsupervised clustering", in the context of the invention, refers to computational methods used to group data points based solely on intrinsic similarities or distances between features, without relying on external annotations or labels. Such methods may include, but are not limited to, algorithms such as K-means clustering, hierarchical clustering, DBSCAN (density-based clustering), Gaussian Mixture Models (GMM), or hierarchical clustering. The invention in some embodiments comprises clustering performed on combined data from animals experiencing pain and control animals not experiencing pain. Preferably, clustering is performed iteratively, exploring various numbers of clusters, ranging typically from about 10 to about 200 clusters, to ensure robustness and identify optimal cluster distributions.

In some other embodiments, it may be performed separate clustering for each group, followed by spatial comparisons between clusters

It is noted that, in the context of the invention, some embodiments may perform unsupervised clustering in different groups of data to later perform statistical comparisons and analysis that allow to identify clusters representative of pain groups. For example, instead of clustering purely based on intrinsic feature similarity without prior knowledge of their category, in some embodiments said clustering leverages known categories or classifications to direct or validate the formation of clusters. In some embodiments, clustering may involve initially performing separate clusterings for datasets of animals experiencing pain and animals not experiencing pain, independently, and subsequently identifying corresponding or spatially proximal clusters from each dataset. For example, clusters from pain-related datasets may be directly compared with clusters from non-pain-related datasets to detect statistically significant differences in their composition, position, or distribution within a feature space. Additionally, other statistical analysis may be performed to check that the clusters are representative of a group, for example taking in consideration the number of individuals in said clusters or if a cluster is dominated by a given individual, denoting progrably and identification of individual features more than pain expression features.

The term "the face of an animal experiencing pain", in the context of the invention, specifically refers to images or video frames depicting the frontal or substantially frontal facial region of an animal under conditions known or intended to induce pain. Preferably, such images or videos are recorded by cameras positioned approximately in front of the animal, typically at a height aligned horizontally or nearly horizontally with the animal's face, ensuring direct or near-direct frontal visualization. The facial region captured preferably comprises, but is not limited to, eyes, ears, nose, whiskers, cheeks, and mouth areas. This frontal or near-frontal orientation enables accurate extraction and analysis of facial features indicative of pain. Thus, recordings focusing predominantly on body posture, locomotion patterns, or general behavior taken from overhead or other non-frontal angles should not be considered as comprising the face of an animal in the sense described in the invention.

The term "the face of an animal in normal conditions or not experiencing pain", in the context of the invention, refers similarly to images or videos recorded under normal, pain-free, or control conditions. Such images or videos preferably follow the same recording conventions mentioned previously (captured frontally or nearly frontally, clearly visualizing the facial regions). The animal in these cases is either not exposed to known pain-inducing interventions, or has received analgesic treatments, anaesthetics, or has recovered sufficiently from interventions such that it is understood and accepted as not experiencing pain at the time of recording.

The term "statistical comparison", in the context of the invention, refers to computationally analysing the distribution or frequency of data points, such as extracted facial features, within or between clusters, to determine statistically significant differences between one or more groups of animals experiencing pain and one or more groups of animals not experiencing pain. Such statistical comparisons may involve, but are not limited to, parametric or non-parametric tests such as t-tests, Mann-Whitney U tests, chi-squared tests, Fisher's exact tests, permutation tests, ANOVA, or equivalent statistical methods, preferably using significance thresholds ranging from about p<0.15, p<0.10 or p<0.05 to p<0.01, p<0.005 or lower, as long as it is considered necessary to ensure reliability and robustness of the identification process.

The term "statistical comparison", in this context, may include one or both intra-cluster comparisons (meaning comparisons between pain and no-pain data points within the same cluster) and inter-cluster comparisons, where data points from corresponding clusters between pain and no-pain groups are compared, particularly focusing on clusters that are spatially proximate or otherwise associated.

The term "animal-generated sound feature extraction", in the context of the invention, refers to computational analysis of audio data obtained from animals to identify, quantify, and characterize acoustic signals associated with the presence or absence of pain. These sounds may include vocalizations such as squeaks, chirps, ultrasonic calls (e.g., rodent ultrasonic vocalizations), breathing patterns, or other vocal or non-vocal auditory signals. Feature extraction may include, without limitation, parameters such as pitch, frequency content, spectral distribution, duration, amplitude, harmonicity, formants, and temporal modulation. The extracted sound features may in some embodiments subsequently undergo dimensionality reduction and clustering processes similar or complementary to those described for facial feature analysis, providing additional multimodal indicators of animal pain states.

The term "feature movement estimation", in the context of the invention, refers to computationally determining or quantifying changes or displacements in identified facial landmarks or features over consecutive or temporally separated video frames. Such estimation may include, but is not limited to, methods such as optical flow algorithms (e.g., Lucas-Kanade, Farnebäck methods), deep-learning-based approaches (e.g., FlowNet), frame-differencing techniques, or other temporal feature-tracking methodologies. Feature movement estimation can provide information about subtle or pronounced facial muscle movements or transitions, enhancing the ability to detect dynamic patterns that are indicative of pain-related facial expressions and may be integrated into the feature extraction and clustering procedures to improve accuracy in pain detection.

The term "pain or discomfort related biological signals or expressions ", in the context of the invention, refers to measurable or observable indicators or manifestations exhibited by a human or animal individual experiencing pain or discomfort. Such indicators or manifestations may comprise, but are not limited to, facial expressions (e.g., eye closure, grimaces, ear positioning, whisker movements, muscle tension), auditory signals (e.g., vocalizations, moans, ultrasonic calls, breathing patterns), physiological or biosignal data (e.g., heart rate variability, blood pressure, galvanic skin response, brain activity patterns, brain waves, thermal changes), movement patterns, postural changes, or any combination thereof. The origin of the pain or discomfort may be spontaneous, but is preferably experimentally induced (such as through surgery, disease, inflammation, chemical irritants, medication or medical procedures), and the signals or expressions may vary in intensity, duration, frequency, or pattern among different species, individuals, or conditions.

The term " representative value of the number of data points per individual", in the context of the invention, preferably refers to a statistical quantity indicative of a central or typical number of data points per individual within a defined group. Said representative value may correspond to any suitable statistical measure of central tendency or typical representation, such as, but not limited to mean, median, mode, trimmed mean, average, weighted average, geometric mean, or any other suitable measure appropriate for representing the distribution of data points within each group. The representative value may be any mathematical expression that provides a basis for meaningful statistical comparison between groups. It is noted that said representative value, in some embodiments, may refer instead to a raw number of data points or a processed number of data points, such as after removing data points considered artifacts or outliers. Additionally, in some embodiments it may refer broadly to any statistical quantity or parameter that characterizes, summarizes, or represents the number of data points associated with individuals within a specific group (such as a "pain or discomfort" group, or a "no pain or discomfort"/"normal conditions" group) in a given cluster.

It is noted that a "data point" in this context may refer to, but not limited to, an image, a video frame, an audio sample, a physiological measurement (such as heartbeat rate, temperature measurement, galvanic skin response, or brainwave data), or any other discrete unit or representation of input data or information derived therefrom, including discrete groups of said input data such as full videos.

The term " statistical measurement of data point dispersion ", in the context of the invention, refers to a difference between two or more representative statistical values, each corresponding to a group (for example, a "pain or discomfort" group and a "no pain nor discomfort" or "normal conditions" group), which is unlikely to have occurred by chance or random variation alone. The statistical significance may be determined by applying suitable statistical tests or analyses known in the art, such as, but not limited to, Student's t-tests, Mann-Whitney U tests, analysis of variance (ANOVA), chi-squared tests, permutation tests, or equivalent hypothesis-testing methods. Typically, the significance level (p-value threshold) used to establish statistical significance is set below 0.1 or below 0.05, although lower thresholds such as 0.01 or 0.001 may also be employed, depending on the desired robustness of results. It is noted that preferably, evaluating statistical significance involves at least two distinct considerations. On the one hand, the statistical test compares the representative statistical values-such as central statistical measures (e.g., mean, median)-computed from the number of data points per individual between groups (e.g., "pain" vs. "no pain"), identifying clusters wherein one group exhibits significantly more data points per individual compared to the other group. On the other hand, the evaluation of statistical significance preferably also incorporates a statistical measure of dispersion or variability (e.g., standard deviation, variance, interquartile range, mean absolute deviation) within each group, ensuring that the difference between groups genuinely reflects a collective characteristic (e.g., pain-related signals or expressions), rather than being an artifact caused by disproportionate representation or dominance by one or very few individuals within the group.

For example, when analysing facial expressions captured in images or videos, certain clusters of data points belonging to the pain group might predominantly represent the unique facial features of one or two individuals rather than a pain expression common to multiple individuals. Such clusters would exhibit a large dispersion measure, indicating that the cluster is dominated by a small number of individuals, and thus not representative of collective pain or discomfort expressions. Conversely, a statistically significant difference with low dispersion indicates that the difference in representative values (e.g., average number of frames or images per individual) reliably reflects a collective, pain-related expression present across multiple individuals in the pain group. Thus, in some embodiments of the invention, the concept of "statistically significant difference" comprises filtering clusters by considering both: (1) the magnitude and statistical significance of the difference between representative values associated with the pain and no-pain groups, and (2) the statistical dispersion within each group, thereby excluding clusters whose significance is driven by disproportionately high representation from one or very few individuals rather than by a genuine collective biological signal or expression related to pain or discomfort. It is noted that this principle may apply equivalently to other types of input data described in the claims, including audio signals (e.g., animal-generated vocalizations), physiological or biosignal data (e.g., heartbeat patterns, thermal or brain wave data), and any combinations thereof.

The term " statistically significant difference ", in the context of the invention, refers to a difference between representative statistical values associated with two or more groups, such as a first group comprising individuals experiencing pain or discomfort and a second group comprising individuals not experiencing pain nor discomfort, wherein this difference is unlikely to have arisen by chance alone. Determining statistical significance in some embodiments may comprise performing appropriate statistical analyses, such as, but not limited to, Student's t-tests, Mann-Whitney U tests, analysis of variance (ANOVA), permutation tests, chi-squared tests, Fisher's exact tests, or equivalent methods. The statistical significance threshold (p-value) employed may typically be set at 0.1, 0.05 or lower (for example, 0.01 or 0.001), depending on the level of confidence sought. In the context of the invention, the evaluation of statistical significance preferably takes into consideration both the magnitude of the difference between representative statistical values of the compared groups and the dispersion or variability within each group. Thus, a statistically significant difference preferably implies that the difference observed between groups is not only meaningful in magnitude but also reflects a collectively representative biological signal or expression rather than an artifact resulting from excessive dominance or overrepresentation by a single individual or a small subset of individuals within the cluster. This allows to identify clusters that truly represent pain or discomfort-related biological signals or expressions shared among multiple individuals, rather than individual-specific characteristics. Such evaluations may apply broadly across diverse data types such as images, videos, audio data, physiological signals, or combinations thereof.

The term " plurality of iterations ", in the context of the invention, refers to performing a process, such as clustering, more than once, preferably multiple times, each time modifying at least one parameter or condition (such as, but not limited to, the number of clusters or initialization conditions). For example, a plurality of iterations may involve clustering the same dataset repeatedly using different numbers of clusters, for instance, from about 10 clusters to about 200 clusters or more, to robustly identify clusters associated with pain or discomfort signals. Iterating clustering methods ensures that identified differences are not incidental and improves the reliability and coverage of the classification method. The number of clusters may also be determined by the number of individuals in one or in both of the groups, to make sure, for example, that there is at least one cluster per individual or more clusters than individuals, for instance to filter face-recognition clusters based on personal facial features (in the case of evaluating facial features), providing at least one more cluster which would indicate a clustering due to facial expressions. Additionally, in some embodiments, the clusters associated to particular individual facial features may be registered or mapped in the space, in order to perform a clustering iteration that would depart away from said clusters centroids or gravitational centers, in order to promote clustering based on general facial expressions and not in clusters dominated by a single individual, denoting that it is grouping by their individual facial features (facial recognition) instead of by expressions. Additionally, the iterations may obtain information of the previous clustering iteration to determine the starting point of the new clustering, for a different or the same number of clusters for example to try to distance the starting point of the clustering algorithm from the clusters associated to the no-pain group. In some other embodiments the number of clusters is pre-determined (for example, 10, 20, 30, 40, etc... until 200 or more). Similarly, in some embodiments the number of iterations is predetermined (for example, 5, 10, 15, 20 or more). However, in some other embodiments the number of clusters or iterations is not pre-determined and it is based on the data point distribution, or based on the standard deviation of the clusters, for example setting a threshold to directly obtain clusters with low standard deviation. This would allow, for example, to remove clusters with low standard deviation but dominated by one individual, or two, which would indicate that this is a cluster made based on individual facial features (facial recognition) in the case of the input being image or video comprising faces for example. This would also allow, for example, to keep clusters with low standard deviation that have a big proportion of the individuals comprised in the group, such as for example at least 30%, at least 40%, at least 50%, at least 75%, at least 80% at least 90% or at least 95%, or 100% of the individuals of a given group. For example at least a 75% of the individuals belonging to the group of pain are comprised in a cluster that has a low standard deviation, that would be indicative that said cluster groups data points (such as image or video frames of faces) based on expressions that are generalized in the group, and then if there is a statistically significant difference between the number of data points associated to the pain-group (for example at least 30%, at least 40%, at least 50%, at least 75%, at least 80% at least 90% or at least 95%, or 100% difference) with respect to the no pain group, being less the no pain group, then this would indicate that said cluster comprises features, data points or input data related to pain or discomfort experiencing individuals.

The term " machine learning algorithm ", in the context of the invention, refers to a computational algorithm capable of automatically improving its performance on a specific task-such as classifying biological signals or expressions-by learning from data. Such algorithms may include, but are not limited to, supervised learning algorithms (e.g., support vector machines (SVM), random forests, decision trees, neural networks including convolutional neural networks (CNN), recurrent neural networks (RNN), transformers, gradient-boosted machines, logistic regression, semi-supervised or self-supervised learning algorithms, reinforcement learning algorithms, unsupervised learning algorithms, or hybrid approaches combining multiple learning paradigms. The term may comprise multimodal algorithms adapted to process different types of input data (e.g., image, video, audio, physiological signals) and capable of learning to identify and differentiate signals indicative of pain or discomfort from signals indicative of normal, baseline, or non-pain conditions.

### Description

The present invention solves the problem of subjectivity, low reproducibility, and limited scalability that characterize current methods used for assessing pain in animals through facial expressions. Traditional approaches rely on manual selection of video frames or images by trained observers, who use visual scoring systems like grimace scales. This process is inherently subjective, labour-intensive, and prone to intra- and inter-observer variability, reducing the reliability and comparability of the results. Moreover, these conventional methods are poorly suited for high-throughput or large-scale data analysis, lack robust statistical validation, and require retraining when applied to different animal strains, species, or experimental setups.

The core of the invention lies in the development of a fully automated computer-implemented method that uses unsupervised machine learning algorithms to identify pain or discomfort-related biological signals or expressions, particularly facial expressions, from a dataset comprising image, video, audio, and/or physiological signals. The method comprises feature extraction, dimensionality reduction, and clustering, followed by intra-cluster statistical comparison between groups of individuals experiencing pain or discomfort and those not experiencing such conditions. Clusters that show a statistically significant difference in representation between these groups are automatically selected as indicative of pain-related expressions. These selected data points may then be used either directly for classification (e.g., by comparing proximity to known clusters) or to train a dedicated classifier (e.g., a neural network), which can then be used to identify similar expressions in new data.

This approach not only eliminates the need for manual selection and labelling of frames but also ensures greater objectivity and statistical robustness in identifying relevant signals. It allows generalization across individuals, strains, and experimental contexts, and may be extended to multimodal inputs such as audio, thermal, LiDAR, or brain wave data. Moreover, although the invention is exemplified with respect to pain and discomfort recognition in animals, the same methodology may be adapted to identify other physical, physiological, or psychological conditions, such as stress, sedation, agitation, fear, aggression, fatigue, depressive states, hunger, or recovery after treatment. By substituting the target groups (e.g., "depressed" vs. "non-depressed" individuals), the same algorithmic pipeline can be applied to create objective classifiers for a wide range of behavioural or physiological endpoints.

Each embodiment disclosed herein is contemplated as being applicable to each of the other disclosed embodiments. Thus, all combinations of the various elements described herein are within the scope of the invention. It should also be understood that, unless clearly indicated to the contrary, in any methods claimed herein that include more than one step or act, the order of the steps or acts of the method is not necessarily limited to the order in which the steps or acts of the method are recited.

In a first aspect of the invention, a computer implemented method for identifying biological signals or expressions, preferably pain or discomfort related biological signals or expressions, in a plurality of human or animal individuals is disclosed. It is noted that said plurality of individuals comprise a first group comprising one or more individuals experiencing a physical, physiological or mental condition, preferably pain or discomfort and, optionally, a second group comprising one or more individuals in normal conditions or not experiencing said physical, physiological or mental condition, preferably pain or discomfort. The method comprising the steps of:
a) Optionally, or preferably, performing feature extraction on input data, the input data comprising image, video, audio and/or physiological signals, preferably wherein said extracted features comprise visual, acoustic and/or physiological characteristics of the input;
b) Optionally, or preferably, reducing the dimensionality of data associated to the extracted features in step (a) with a dimensionality reduction algorithm, preferably wherein said algorithm is a principal component analysis algorithm or an auto-encoder algorithm such as a variational auto-encoder;
c) clustering the data of step (b) with a clustering algorithm, preferably with a non-supervised clustering algorithm, wherein the algorithm is a K-means algorithm, preferably wherein several iterations of clustering are performed, each with a different number of clusters, such as from 10 to 200, more preferably in steps of 10 clusters (10, 20, 30, ...200). It is noted that if in some embodiments the dimensionality of data of step (b) is carried out with a dimensionality reduction algorithm wherein said algorithm additionally further performs clustering, partitioning, grouping or segmenting data into clusters, partitions, groups, or segments, then step (c) may be inherently comprised in step (b) and could thus be optional. For example, it may be employed Multidimensional Scaling (MDS) for dimensionality reduction, and then manually selecting groups of data points obtained, however in this approach it is preferably employed a clustering algorithm after a reduction of dimensionality with an MDS algorithm in order to select said groups;
d) making a statistical comparison between the physical, physiological or mental condition, preferably pain or discomfort, related data points with data points related to the absence of said experiencing a physical, physiological or mental condition, preferably no pain nor discomfort related data points, preferably said comparison is made intracluster, preferably said comparison is made for each cluster obtained in step (c), preferably the comparison is made for at least one cluster and comprises the steps of:
   i. computing the number of data points associated to each individual;
   ii. computing a first representative value, of the number of data points per individual associated to the first group, and, optionally, a second representative value of the number of data points per individual associated to the second group, preferably said representative value is an average, or a statistical measurement, or a score, or a mathematical relationship with the number of data points per individual;
   iii. computing a statistical measurement of data point dispersion in the first and optionally in the second representative values;
   iv. comparing, the first and second representative values associated to the first and second groups, evaluating the statistical significance of said comparison by taking in consideration the dispersion computed in step (iii), or, optionally, comparing the first representative value with a third representative value obtained from the first group which is different than the first representative value, evaluating the statistical significance of said comparison by taking in consideration the dispersion computed in step (iii), preferably said comparison is made intra-cluster but in some embodiments it may comprise two or more clusters;
e) identifying said biological signals or expressions preferably pain or discomfort-related biological signals or expressions, by selecting clusters, or features or images from said clusters, or signals or expressions from said selected clusters, that comprise a statistically significant difference between the first and second representative values, or between the first and third representative values, for example wherein P<0.025 or P<0.05 or P<0.1.

It is noted that the plurality of individuals referred to in this first aspect may comprise human or animal subjects, such as, but not limited to, rodents, primates, domestic animals, livestock, or patients, preferably in research, veterinary, preclinical or clinical settings. The individuals comprised in the first group may be defined as "pain or discomfort-experiencing individuals", a term which may be interpreted as individuals under induced pain conditions, such as postoperative pain, inflammatory responses, musculoskeletal injuries, chemical or thermal nociceptive stimulation, neuropathic models, pharmacological induction, or other standardized methods for triggering measurable pain-related responses. In some embodiments, discomfort may refer more broadly to non-painful but aversive physiological or emotional conditions or states, such as stress, fatigue, anxiety, respiratory or gastrointestinal distress, or exposure to abnormal environmental stimuli.

Preferably, individuals in the second group may comprise matched controls, sham-operated animals, individuals under sedation or analgesia, healthy volunteers, or animals in unperturbed baseline conditions. The categorization into first and second groups may also be determined retrospectively, for example based on behavioural coding, clinical assessment, biometric thresholds, or pharmacological administration.

In step (a), feature extraction may comprise the detection, quantification or transformation of relevant patterns from input data, which may comprise still or moving images, infrared or thermal video, full-spectrum or multispectral imaging, audio signals, heart rate signals, EEG, EMG, brain waves, brain activity, temperature, oxygen levels, skin conductance, respiration, blood pressure, pupil diameter, tail flick latency, or combinations thereof. In some embodiments, feature extraction may be performed separately per modality, using independent pipelines for video, audio and physiological data. In other embodiments, multimodal fusion may occur early, wherein raw data is combined before feature extraction, or late, wherein extracted features are combined. Extracted features may comprise, for example, movement descriptors (e.g. frequency of whisker twitches), image embeddings from convolutional layers of pre-trained neural networks, spectrogram-based descriptors of vocalizations, or heart rate variability features derived from RR intervals. In some embodiments, input data may be pre-processed with artifact removal, temporal smoothing, filtering, cropping, or alignment.

In step (b), the dimensionality reduction algorithm may be selected based on the type and structure of the extracted features. In some embodiments, non-linear techniques such as UMAP, t-SNE, kernel PCA, VAE, VAME, MDS, or self-supervised autoencoders may be preferred when feature embeddings lie on non-linear manifolds. In other embodiments, the dimensionality reduction may be learned directly from data using contrastive learning, or may be skipped altogether if clustering algorithms in step (c) support high-dimensional spaces. The reduced space may optionally retain at least 90%, 95% or 99% of variance, or may be thresholded based on performance metrics or interpretability constraints. It is further noted that the reduction may be done jointly for all individuals, or separately per group, species or modality.

In step (c), clustering may comprise unsupervised learning algorithms configured to group feature vectors into clusters based on similarity measures, such as Euclidean distance, cosine similarity, Mahalanobis distance, or custom distance metrics. In some embodiments, K-means is used, with the number of clusters ranging preferably from 10 to 200, optionally in fixed steps. In other embodiments, DBSCAN, HDBSCAN, Gaussian Mixture Models, agglomerative clustering, or spectral clustering may be employed. The clustering may be iteratively repeated with different initializations, seeding strategies, cluster numbers, or feature subsets. In some embodiments, the number of clusters may be a function of the number of individuals, for example being greater than the number of individuals to distinguish between clusters corresponding to individual traits and those corresponding to shared expressions. In further embodiments, clusters known to be dominated by individual-specific features (e.g., facial identity) may be explicitly avoided or penalized using spatial information from prior clustering rounds, centroids, or cluster mappings.

In step (d), statistical comparison may be performed within each cluster (intra-cluster), although in some embodiments comparisons across multiple clusters or sets of clusters may also be performed. The representative values computed in step (d.ii) may comprise average data points per individual, medians, weighted means, ratios, or normalized quantities, with normalization based on total data points, recording duration, or individual baselines. The dispersion computed in step (d.iii) may comprise variance, standard deviation, interquartile range, or Gini index, and may be used to assess whether clusters are dominated by single individuals. The statistical significance evaluation in step (d.iv) may comprise, but is not limited to, t-tests, Welch's t-test, Mann-Whitney U tests, bootstrapping, permutation tests or Bayesian inference. In some embodiments, multiple comparisons may be corrected using Bonferroni correction or false discovery rate control. In other embodiments, step (d.iv) may involve comparison against internal or external references, such as average cluster profiles from known datasets or synthetic controls. It is noted that said statistical comparison may allow to select or identify potentially relevant clusters or clusters that comprise data points or features comprising biological signals or expressions related to pain or discomfort.

In step (e), selected or identified clusters may be used to label, filter or select data points, features, frames, signals or individuals comprised in said clusters that are understood to be associated with pain or discomfort. In some embodiments, only clusters with a p-value below a certain threshold (e.g., P<0.05 or P<0.1) may be retained. In other embodiments, selection may also be based on effect size, dispersion, or the proportion of represented individuals. In some embodiments, the output may be one or more frames extracted from video, time windows in physiological signals, or acoustic segments representative of vocalizations associated with pain. In some embodiments, the method may be used to generate training datasets for supervised models, or to rank or prioritize candidate regions or segments for expert review.

It is further noted that the same methodology may be applied to detect, classify or analyse other conditions or states beyond pain or discomfort. In some embodiments, the first group may comprise individuals under pharmacological treatment and the second group untreated controls, thereby enabling automatic identification of drug-induced responses, for example for evaluating analgesic, anxiolytic, antidepressant, antiepileptic, anti-inflammatory, anti-emetic, or cognitive-enhancing compounds. In other embodiments, the method may be applied to behavioural phenotyping, for example distinguishing social from non-social behaviour, hunger or satiety states, circadian cycle phases, maternal behaviour, sleep stages, alertness, sedation, or the presence of neurological or neurodegenerative conditions such as epilepsy, Parkinson's, or Alzheimer's models. In some embodiments, the method may further be used in human or animal populations for early detection of chronic pain, fatigue, mood disorders, anxiety, or physiological states such as dehydration, inflammation, or hormonal shifts. Additionally, it may be used in veterinary or livestock contexts for the monitoring of welfare, injury, illness, reproductive cycles, or stress, and in laboratory settings for high-throughput phenotypic screening. In some embodiments of the invention, the method may be employed for identifying other biological signals or expressions such as the ones related to happiness, sadness, hunger, extitation, focus, hyperactivity, or mental conditions or disorders such as any one of the defined in the DSM-5. Alternatively, It could further be applied to identify not only biological signals or expressions, but also permanent or temporary physical states, such as obesity, baldness, physically observable sicknesses, age or aging states, for example to allow the study of the efficacy of anti-aging products, first by being able to identify aging related data points, and then applying said classification or employing a neural network trained with said images to identify aging signals, in order to evaluate the efficacy of anti-aging products such as medication or creams in new individuals.

Advantageously, the method disclosed in this aspect of the invention enables the automated and objective identification of data segments, expressions or signals associated with pain or discomfort-related biological states, without requiring human supervision or prior manual labelling. This overcomes the limitations of current approaches that rely on time-consuming, subjective and non-reproducible annotations by trained observers, for example in contexts such as animal facial grimace scoring or vocalization-based pain assessment. By employing unsupervised learning strategies with statistical validation, the invention allows for scalable, reproducible, and species-agnostic analysis of multimodal data. It may be used to generate training sets for supervised classifiers or directly support real-time classification or monitoring systems. Furthermore, the method is versatile and extensible to other application domains, enabling its adaptation to detect signals related to diverse behavioural, emotional, cognitive, physical or physiological conditions simply by redefining the group assignment, making it broadly applicable in neuroscience, pharmacology, behavioural science, animal welfare, and clinical diagnostics.

It is noted that in some embodiments, clustering may be performed jointly on a combined dataset comprising data points from both groups-those individuals experiencing pain or discomfort and those not experiencing such conditions-so that group-related differences naturally emerge through the statistical comparison of intra-cluster data point distributions. However, in alternative embodiments, clustering may be performed separately for each group, generating two distinct sets of clusters. In such cases, the method may comprise comparing the spatial or dimensional distribution of clusters from both groups in the reduced-dimensionality space. For instance, representative points (such as cluster centroids or medoids) of clusters obtained from the pain group may be compared to those from the no-pain group to evaluate their relative positions.

In some embodiments, if clusters from each group lie in similar or overlapping regions of the feature space, they may be interpreted as being unrelated to pain or discomfort. Conversely, clusters from the pain group that are spatially distant from those of the no-pain group may be identified as potentially pain-related, particularly when their internal variability is low and/or their composition comprises a large proportion of individuals from the pain group. This evaluation of inter-group cluster separation may be performed using distance-based metrics, such as Euclidean or Mahalanobis distance, or using more complex dimensionality-aware distance functions. Additionally, such spatial comparisons may be combined with or followed by statistical significance testing to confirm whether the separation observed corresponds to meaningful and reproducible differences between groups.

In some embodiments, an additional condition for validating the clustering process may comprise ensuring that the resulting clusters converge towards a low internal data dispersion. By enforcing or selecting clusters with low dispersion-such as low intra-cluster variance or standard deviation in feature space-the method may avoid or reduce the need for subsequent statistical significance evaluation. This is because low-dispersion clusters are less likely to be skewed by overrepresentation from individual-specific traits (e.g., facial structure unique to one subject), and more likely to reflect collective patterns shared across individuals, such as expressions of pain or discomfort.

Moreover, in some preferred embodiments, the method may comprise filtering or discarding clusters that comprise data points from only one individual or from only a limited subset of individuals, such as two or three. These clusters are less likely to represent generalizable patterns and may instead reflect idiosyncratic features unrelated to the condition of interest. Therefore, the spatial separation analysis and/or dispersion-based filtering may be combined, optionally prior to or instead of statistical testing, to efficiently identify clusters likely to represent biologically meaningful and condition-specific signals while avoiding false positives driven by individual-specific data concentration.

An alternative embodiment of the first aspect of the invention could be enunciated as:
A computer implemented method for identifying pain or discomfort related biological signals or expressions in a plurality of human or animal individuals, wherein said plurality of individuals comprise a first group comprising one or more individuals experiencing pain or discomfort and a second group comprising one or more individuals in normal conditions or not experiencing pain or discomfort, the method comprising the steps of:
f) optionally, performing feature extraction on input data, the input data comprising image, video, audio and/or physiological signals;
g) optionally, reducing the dimensionality of data associated to the extracted features in step (a) with a dimensionality reduction algorithm;
h) clustering the data of step (b) with a clustering algorithm;
i) for each cluster obtained in step (c), performing a statistical comparison between data points, wherein, preferably, the statistical comparison comprises:
   i. comparing the number of data points associated to individuals experiencing pain and data points associated to individuals in normal conditions or not experiencing pain,
   ii. evaluating the statistical significance of the comparison of step (d.i) by taking in consideration the number of data points associated to a single individual in a given cluster with respect to the total number of data points in said cluster, or the number of individuals with respect to the total number of data points;
j) identifying pain-related biological signals or expressions by selecting features from clusters that comprise a statistically significant difference in the number of data points associated to an individual experiencing pain and the number of data points associated to an individual in normal conditions or not experiencing pain.

Additionally, alternative embodiments of the invention relating to feature extraction (step a) may comprise various additional or alternative approaches for extracting meaningful features from the input data. For instance, depending on the type of input data-such as image, video, audio, physiological signals, or combinations thereof-the feature extraction may comprise identifying anatomical landmarks (for example, facial landmarks including eyes, ears, nose, mouth, whiskers), tracking temporal changes in position or shape of landmarks, extracting texture-based features (for example, histograms of oriented gradients, local binary patterns, scale-invariant feature transforms, wavelet transforms, Fourier descriptors), deep learning-based features derived from convolutional or recurrent neural network layers (such as ResNet, Inception, EfficientNet, Transformer architectures, or similar), statistical descriptors of audio data (for example, Mel-frequency cepstral coefficients (MFCCs), spectral contrast, tonality, pitch variations, or frequency-domain features), physiological metrics (such as heart rate variability, galvanic skin response patterns, EEG frequency bands, brain waves, brain activity, oxygen levels in blood, temperature), or combinations thereof. In some embodiments, feature extraction may additionally include normalizing or aligning data across time intervals or individuals (such as affine or rigid-body transformations applied to image or video data, time alignment in physiological signals, or standardization in audio recordings), or employing self-supervised or semi-supervised learning strategies to automatically extract robust and meaningful feature representations from unlabelled or partially labelled data.

Alternative embodiments of the invention relating to dimensionality reduction (step b) may further comprise various methods or combinations of methods designed to produce lower-dimensional representations of extracted features while preserving critical information. Such methods my comprise, but are not limited to, linear dimensionality reduction algorithms such as Principal Component Analysis (PCA), Independent Component Analysis (ICA), Linear Discriminant Analysis (LDA), Non-negative Matrix Factorization (NMF), factor analysis, or linear autoencoders; non-linear dimensionality reduction techniques such as manifold learning algorithms (for example, Isomap, locally linear embedding (LLE), t-distributed Stochastic Neighbor Embedding (t-SNE), Multidimensional Scaling (MDS), Uniform Manifold Approximation and Projection (UMAP)), non-linear autoencoders, Variational Autoencoders (VAE); hybrid or hierarchical methods that sequentially combine multiple dimensionality reduction steps (for instance, applying PCA followed by UMAP, or autoencoders followed by manifold embedding); and adaptive dimensionality reduction approaches that iteratively optimize parameters or dimensionality based on intrinsic properties of the data (such as information criteria, explained variance thresholds, or intrinsic dimensionality estimation methods). Furthermore, dimensionality reduction may be performed separately per group (for example, pain versus no pain) or jointly, depending on the application or desired outcome.

Clustering in step (c) is preferably performed by employing a K-Means algorithm. However, alternative embodiments of the invention may comprise multiple additional or alternative approaches designed to group data points meaningfully. In certain embodiments, clustering algorithms may include but are not limited to centroid-based clustering methods (such as K-means, K-medoids, mini-batch K-means), density-based clustering methods (such as DBSCAN, HDBSCAN, OPTICS), distribution-based clustering methods (such as Gaussian Mixture Models (GMM)), hierarchical clustering methods (such as agglomerative clustering, divisive clustering, Ward's method), spectral clustering, affinity propagation, self-organizing maps (SOM), fuzzy clustering (such as fuzzy C-means), or hybrid clustering methods combining multiple clustering algorithms sequentially or in parallel.

Additionally, alternative embodiments of the invention may employ iterative or adaptive clustering methods, for example to explore different possibilities or combinations of clusters, or configured to address issues such as clusters dominated by individual-specific features rather than general expressions. For instance, clustering may be iteratively performed multiple times, modifying parameters such as cluster number, initialization seeds, clustering metrics, or distance measures between iterations. In some embodiments, clustering parameters may be dynamically adjusted based on outcomes of previous iterations, such as using previously identified cluster centroids as initial seeds or specifically distancing new cluster initializations away from previously identified clusters, for example from the ones representing individual-specific features or related to certain groups such as the no pain nor discomfort group.

In some further embodiments, the number of clusters employed may be explicitly linked to the number of individuals, ensuring that the resulting clustering separates individual-specific features from collective expressions (for example, selecting at least as many clusters as the number of individuals, plus at least one additional cluster to allow grouping based on collective signals or expressions, preferably related to pain).

In other embodiments, clustering may additionally incorporate constraints derived from individual identities, such as explicitly penalizing clusters that are dominated by data points from one or very few individuals, or explicitly favouring clusters with balanced or broadly representative distribution of individuals from each group. For example, the clustering algorithm may evaluate the data point distribution or standard deviation looking for convergence on low values or below an acceptable threshold, thus affecting this way the points belonging to a cluster and/or the number of clusters. This way clustering may comprise a condition to convergence when comprising a more or less even distribution of the number of data points per individual, trying to grasp signals or expressions that are commonly shared among the group. Clustering approaches may also be guided or constrained by known individual-specific clusters, where previously identified centroids corresponding to individual-specific features (such as unique facial structures or anatomical features) are explicitly registered or mapped and then avoided or penalized in subsequent clustering steps.

Alternatively, some embodiments may employ clustering methods in which the number of clusters is not predetermined but adaptively determined according to the data distribution, for instance by progressively adjusting the number of clusters until reaching certain criteria such as minimum dispersion or intra-cluster variability thresholds. Specifically, embodiments may iteratively reduce or increase the number of clusters until achieving clusters that meet predefined standards of standard deviation or variability, or predefined thresholds of individuals represented per cluster (such as at least 50%, 75%, or 90% of individuals), thus ensuring clusters are reliably indicative of collective pain or discomfort-related expressions rather than individual-specific features.

In certain embodiments, clustering may be performed hierarchically, initially forming coarse-grained clusters and progressively refining these clusters into sub-clusters according to finer criteria such as reduced dispersion, greater representativity of individuals, or improved separation between pain and no-pain groups, thus ensuring robust identification of clusters indicative of pain or discomfort-related biological signals or expressions.

Alternative embodiments of the invention for step (d) comprise:
(d) for each cluster obtained in step (c):
i. computing the total number of data points associated with the first group and the total number of data points associated with the second group within said cluster;
ii. computing the total number of distinct individuals represented in the first group and the total number of distinct individuals represented in the second group within said cluster;
iii. performing a statistical comparison between ratios or proportions defined by the total number of data points and the total number of individuals in each group, thereby evaluating statistical significance to determine whether the cluster collectively represents pain or discomfort-related signals or expressions rather than individual-specific features;

Another alternative embodiment may comprise the following steps:
(d) for each cluster obtained in step (c):
i. for each individual, computing a proportion of data points in the cluster relative to the total number of data points from that individual across all clusters;
ii. computing representative statistical values of said proportions for the first and second groups separately, together with their associated dispersion or variability;
iii. statistically comparing these representative proportions and their dispersions between groups, wherein clusters exhibiting significant differences are indicative of pain or discomfort-related biological signals or expressions occurring collectively rather than individually;

Another alternative embodiment may comprise the following steps:
(d) for each cluster obtained in step (c):
i. computing normalized or weighted representative statistical values of data points per individual within each group, wherein individual contributions are weighted inversely by their associated dispersion or variability;
ii. statistically comparing said normalized or weighted representative values between groups, ensuring that clusters selected represent collective biological signals or expressions rather than individual anomalies;

Another alternative embodiment may comprise the following steps:
(d) for each cluster obtained in step (c):
i. performing pairwise or groupwise statistical comparisons of the number or proportion of data points per individual across individuals or subgroups within and between groups;
ii. identifying clusters wherein the statistical comparison reveals significant inter-group differences combined with relatively low intra-group dispersion, thereby ensuring identified clusters represent collective pain or discomfort-related biological signals or expressions;

It is noted that in some embodiments the last step may comprise identifying pain or discomfort-related biological signals or expressions by selecting clusters, or features, data points and/or signals comprised in said cluster, which are statistically determined according to any embodiment of step (d) above mentioned, to exhibit a significant and reliable difference indicative of collective pain or discomfort signals or expressions rather than signals dominated by individual-specific features or variations.

In some embodiments, the representative value preferably comprises a measure of central tendency, such as, but not limited to, arithmetic mean (average), median, mode, trimmed or truncated mean, weighted average (wherein weights may optionally be based on data quality, confidence, reliability scores, or temporal proximity), geometric mean, harmonic mean, or any other suitable statistical measure designed to summarize a typical or central number of data points associated with individuals within a group. These central measures may preferably be calculated per individual and/or per group to enable reliable statistical comparisons.

In alternative embodiments, the representative value may comprise measures of total or aggregate representation, such as, but not limited to, the total sum, cumulative count, or integrated density of data points within a given group, cluster, or subset thereof. These aggregate measures may preferably be normalized by the total number of distinct individuals in the group or cluster, yielding an average-per-individual measure or facilitating robust comparison across groups.

In other embodiments, the representative value may comprise proportional or relative measures, such as, but not limited to, ratios of data points per individual between groups, proportions of total data points contributed by each group, or relative frequencies of data points per individual across groups. Such proportional measures may also comprise proportions of individuals whose data points exceed certain thresholds or proportions reflecting the presence or absence of data points from particular individuals.

Additionally, some embodiments may comprise statistical distribution-based measures, wherein the representative value is derived by evaluating statistical properties of data point distributions, such as, but not limited to, distribution shape, skewness, kurtosis, quantile values (e.g., quartiles, deciles, percentiles), or peak-to-average ratios. Alternatively or additionally, fitting known probability distributions, such as Gaussian, Poisson, or negative binomial distributions, to datapoint-per-individual distributions and employing distribution parameters (e.g., mean, variance, dispersion factors) as representative values may be comprised in some embodiments.

In further embodiments, dispersion-aware representative values may be employed, wherein statistical dispersion measures, such as variance, standard deviation, interquartile range, mean or median absolute deviation, or range, may be comprised or combined with measures of central tendency. These dispersion-aware values may preferably automatically exclude clusters that exhibit excessive variability or that are dominated by outlier individuals, thereby allowing identifying clusters genuinely represent collective biological signals rather than individual-specific traits.

Alternatively or additionally, statistical significance evaluations may comprise comparisons of the total number of data points per group within clusters, optionally normalized by group size (number of individuals), or by comparing proportions of individuals represented per group within clusters. These comparisons may preferably utilize standard statistical methods known in the art, including, but not limited to, chi-squared tests, Fisher's exact tests, permutation tests, or equivalent statistical methods, to ensure collective rather than individual-specific representation.

In certain embodiments, statistical evaluations may comprise computing proportions or percentages of data points per individual relative to each individual's total across all clusters, thereby mitigating biases introduced by unequal sampling or data collection durations among individuals. Additionally, weighted representative values may be employed, wherein each individual's data point contribution is inversely weighted by measures of dispersion or variability, further reducing the potential impact of outlier individuals or uneven data distributions.

Moreover, some embodiments may comprise pairwise or groupwise statistical comparisons, such as analyses of variance (ANOVA), Kruskal-Wallis tests, or pairwise post-hoc analyses, explicitly accounting for inter-individual variability and group heterogeneity. These comparisons may facilitate that clusters represent broadly shared biological signals rather than isolated individual traits or anomalies.

Additionally, in some embodiments normalization and standardization approaches may be applied to the data, including, but not limited to, z-score normalization, min-max scaling, rank normalization, quantile normalization, or percentile-based normalization, before calculation of representative values. Such normalization allows comparability across individuals or clusters, thereby improving the reliability of statistical evaluations.

In some further embodiments, threshold-based or binary classification approaches may be employed, wherein absolute or relative thresholds are predefined for acceptable data point contributions per individual, or minimal data points per individual required for inclusion in statistical analyses. Such threshold-based methods may effectively categorize clusters as representative or non-representative without solely relying on continuous statistical metrics.

It is noted that hybrid or multi-criteria approaches combining any of the aforementioned methods sequentially, iteratively, or simultaneously are explicitly contemplated.

According to a preferred embodiment of the first aspect of the invention, the clustering is made a plurality of iterations, each iteration for a different number of clusters, preferably between 10 and 200 clusters, more preferably between 10 and 200 in steps of 10 clusters, but any other combination is contemplated.

In some embodiments, the number of clusters selected in each iteration may be determined dynamically based on characteristics of the dataset, such as the number of individuals, the number of data points per individual, the variance explained after dimensionality reduction, or the dispersion within clusters in previous iterations. In some embodiments, the clustering algorithm may be run with a predetermined set of cluster numbers beyond the 10 to 200 range, for example from 5 to 300 clusters, or using irregular or adaptive steps such as {8, 12, 18, 27, 42, 75, 150, 220}. In yet other embodiments, the number of clusters in each iteration may be defined proportionally to the number of individuals in the first or second group, or derived from a rule such as generating at least one cluster per individual plus a fixed offset to account for potential shared expressions or features.

It is further noted that in some embodiments, the plurality of iterations may also vary other clustering parameters across iterations, such as initialization seeds, distance metrics, feature subsets, or weighting schemes, with or without altering the number of clusters. Additionally, information obtained from one iteration, such as cluster centroids or dispersion metrics, may be used to guide or refine subsequent iterations, for example by penalizing cluster centres associated with individual-specific traits or by emphasizing configurations that maximize inter-group differences. In certain embodiments, a selection criterion may be applied across iterations to retain only the best-performing clustering outcomes based on statistical separation, intra-cluster homogeneity, or representation across individuals.

Advantageously, performing clustering over a plurality of iterations with varying cluster numbers increases the likelihood of identifying meaningful patterns in the data that correspond to pain or discomfort-related signals while minimizing the risk of overfitting or missing subtle expressions. This iterative approach allows both broad and fine-grained representations to emerge and provides robustness against parameter sensitivity inherent in unsupervised learning methods. It allows that clusters representative of collective states, rather than individual anomalies, can be isolated and validated with greater confidence, improving the precision and generalizability of downstream classification or interpretation.

According to a preferred embodiment of the first aspect of the invention, input data comprises one or more images and/or video, and the features extracted comprise facial features. Preferably wherein in said one or more images and/or video all or most of the face is visible. Preferably wherein it is used a facial feature extraction algorithm, preferably wherein said algorithm is a convolutional neural network trained for facial feature extraction.

In some embodiments, the facial features extracted from images and/or video may comprise the location, orientation, and relative position of anatomical landmarks such as eyes, ears, nose, mouth, whiskers, jawline, or fur patterns. The extraction may further comprise dynamic features such as distances between landmarks, angles, ratios, symmetry, or deformations over time, especially when processing video data. In some embodiments, features may be derived from intermediate layers of convolutional neural networks trained for face detection, landmark localization, or expression recognition. In alternative embodiments, key points may be detected using heatmaps, regression-based detectors, graph neural networks, or traditional computer vision techniques such as HOG, SIFT, or SURF descriptors.

It is further noted that visibility of the full or most of the face may be facilitated in some embodiments by positioning the means to acquire one or more images and/or video, preferably a camera, substantially in front of the animal's face, and/or preferably preprocessing the frames to normalize facial orientation using affine transformations or other alignment procedures. In some embodiments, only frames where the face meets visibility criteria (e.g., both eyes visible, forward-facing nose) may be retained for feature extraction, while other frames may be discarded or used only for ancillary analysis. Additionally, in some embodiments, the system may comprise mechanisms to guide the animal to look forward, such as the use of infrared illumination, environmental shaping of the enclosure, or minimal thermal stimulation to promote frontal orientation.

Advantageously, the use of facial features extracted from images and/or video enables a non-invasive, contact-free and highly informative modality for detecting pain or discomfort-related expressions. Facial expressions-particularly micro-expressions or involuntary movements-may be sensitive indicators of internal states and are often conserved across individuals and species. This embodiment allows automatic and scalable analysis without requiring manual scoring of facial expressions, and can be implemented in standard experimental environments with minimal adaptation, making it broadly applicable to behavioural neuroscience, pharmacological studies, animal welfare monitoring, and translational pain research.

According to a preferred embodiment of the first aspect of the invention, the input data comprises animal-generated sounds, and the features extracted comprise animal-generated sound features.

In some embodiments, the animal-generated sound features may comprise acoustic descriptors such as frequency, amplitude, pitch, duration, energy, modulation, spectral centroid, bandwidth, formants, or mel-frequency cepstral coefficients (MFCCs). These features may be extracted from individual calls, vocalization events, or continuous audio recordings using time-windowed analysis. In other embodiments, features may also include temporal patterns such as call rate, inter-call interval, or rhythmic structure, as well as context-related features such as the time of day or behavioural state during vocalization. The sounds may be recorded using microphones, preferably microphones also sensitive to ultrasonic or infrasonic ranges depending on the species studied, and preferably pre-processed with noise filtering, segmentation, or sound event detection algorithms.

It is further noted that in some embodiments, the extracted features may be derived from pre-trained neural networks or self-supervised models developed for acoustic signal classification. In other embodiments, clustering may be performed directly on raw or spectrogram representations of the sounds. The analysis may be performed per vocalization or aggregated over temporal segments. In some cases, the animal-generated sounds may correspond to pain-induced vocalizations (e.g., ultrasonic vocalizations in rodents), but may also reflect other expressions such as distress, aggression, hunger, reproductive states, or general arousal, which may be filtered or distinguished during statistical comparison or subsequent analysis.

Advantageously, the analysis of animal-generated sounds provides a powerful, non-contact method for identifying internal states such as pain or discomfort in a way that is independent from visual data. Audio recordings can be easily obtained, and may be continuous over long durations, and are often rich in behavioural information that is not visible in facial expressions or movement. This embodiment allows detection of pain-related signals in dark environments, for example in situations where the face is not visible, or complementing that analysis, or in species for which visual indicators are subtle or poorly characterized.

In a second aspect of the invention, a computer implemented method for training a machine learning algorithm, preferably a neural network, more preferably a convolutional neural network, for classifying biological signals or expressions as pain or discomfort-related is disclosed. In some embodiments, the machine learning algorithm is multimodal, such as being able to process images and/or video, sounds, text, depth measurements, etc. It is noted that the computer implemented method for training a machine learning algorithm comprises the steps of:
I. identifying pain or discomfort-related biological signals or expressions in a plurality of human or animal individuals according to any one of the previous claims;
II. training a machine learning algorithm with data associated to the pain or discomfort-related biological signals or expressions identified in step (a).

In some embodiments, the data used to train the machine learning algorithm in step (II) may comprise raw input data (e.g., images, video frames, audio waveforms, or physiological signal segments) associated with the clusters identified as statistically representative of pain or discomfort-related expressions according to the first aspect of the invention. Alternatively, the training data may comprise extracted features, embeddings, or transformed representations of said input data, such as latent vectors obtained from dimensionality reduction or convolutional layer outputs. In some embodiments, training may be performed using supervised learning with binary or multi-class labels, for example to classify new inputs as pain-related or not, or to distinguish between different types or intensities of pain or discomfort. In other embodiments, semi-supervised or self-supervised learning strategies may be used, particularly when the data quantity is large or partially labelled.

It is further noted that the machine learning algorithm may be configured to handle multimodal input, such as combining video and audio, or integrating facial and physiological features. In some embodiments, fusion of modalities may occur at the feature level (early fusion), decision level (late fusion), or via attention mechanisms or transformer-based architectures. The trained model may comprise a convolutional neural network, recurrent neural network, residual network, graph neural network, or other architecture suitable for the modality or temporal nature of the input. Training may be optimized using standard methods such as backpropagation, stochastic gradient descent, or adaptive optimizers, and may include regularization techniques, data augmentation, or cross-validation.

Advantageously, this second aspect of the invention provides a systematic and automated way to generate accurate and objective classifiers for detecting pain or discomfort-related biological expressions, trained on data that has been pre-filtered and selected using unsupervised statistical techniques. This eliminates the need for manual annotation or subjective labelling, while ensuring that the training data is enriched in relevant and statistically validated features. The resulting classifier may generalize more robustly to new individuals or conditions and may be deployed in real-time systems for monitoring, screening, or behavioural assessment. Moreover, this method facilitates the generation of specialized models tailored to different species, modalities, or experimental designs, enhancing its utility across a wide range of biomedical, veterinary, and behavioral research applications.

A third aspect of the invention discloses a computer implemented method for classifying biological signals or expressions as pain or discomfort-related or not pain or discomfort-related, comprising the steps of:
III. training a machine learning algorithm for classifying biological signals or expressions as pain or discomfort-related according to the computer implemented method for training a machine learning algorithm for classifying biological signals or expressions as pain or discomfort-related above mentioned;
IV. providing new input data comprising, biological signals or expressions, or image, video, audio and/or physiological signals comprising said biological signals or expressions, to the machine learning algorithm trained in step (III) for classification.

In some embodiments, the machine learning algorithm trained in step (III) may comprise a convolutional neural network (CNN) for image or video input, a recurrent neural network (RNN) or Long Short-Term Memory network (LSTM) for time-series data such as physiological signals or audio, a transformer-based architecture for multimodal input processing, or a feedforward fully connected neural network when operating on previously extracted or flattened feature vectors. The algorithm may also comprise ensemble models such as random forests, gradient boosting machines, or support vector machines (SVM), particularly when training is performed on extracted statistical features instead of raw data. In some embodiments, the training may be carried out using frameworks such as TensorFlow, PyTorch, or Keras, using optimization algorithms such as stochastic gradient descent, Adam, RMSProp, or others, and using loss functions suited to the task such as binary cross-entropy, mean squared error, or categorical cross-entropy, depending on whether binary or multi-class classification is performed.

It is further noted that in step (IV), the new input data may be processed similarly to the data used during training, for example using the same feature extraction pipeline, dimensionality reduction algorithms, or normalization steps. In some embodiments, the classifier may be applied frame-by-frame on a video stream, or window-by-window on physiological or audio signals, optionally followed by temporal smoothing, majority voting, or confidence aggregation. In other embodiments, multimodal input data may be processed simultaneously, for example by a dual-stream or attention-based model capable of weighting visual and acoustic cues depending on their relevance. The classification output may comprise a binary label (pain-related or not), a probability score or confidence value, or a classification into multiple possible states (e.g., low pain, moderate pain, high pain, no pain).

Advantageously, this third aspect of the invention enables real-time or retrospective classification of new input data into pain or discomfort-related categories using models that have been trained on statistically validated, automatically selected examples. This allows consistent and reproducible results while avoiding the subjective interpretation and labor-intensive labeling traditionally required for such classification tasks. The system may be applied in a wide variety of scenarios, including automated welfare monitoring, pain assessment in research animals or patients, pharmacological testing, behavioural screening, or clinical diagnostics, and may be easily adapted to other domains such as stress, fatigue, hunger, or emotion recognition by modifying the training data used in step (III).

A fourth aspect of the invention discloses a computer implemented method for classifying biological signals or expressions as pain or discomfort-related or not pain or discomfort-related, comprising the steps of:
I'. identifying pain or discomfort-related biological signals or expressions in a plurality of human or animal individuals according to any one of claims 1 to 4;
II'. optionally, performing feature extraction on new input data, the new input data comprising image, video, audio and/or physiological signals, preferably with a facial feature extraction algorithm, more preferably wherein said algorithm is a convolutional neural network trained for facial feature extraction;;
III'. reducing the dimensionality of data associated to the extracted features in step (II') with a dimensionality reduction algorithm;
IV'. classifying the new input data as pain or discomfort-related or not pain or discomfort-related as a function of a measure of distance between the dimensionality-reduced data of step (III') and a representative point of one or more clusters that comprise a statistically significant difference in the number of data points associated to an individual experiencing pain or discomfort and the number of data points associated to an individual in normal conditions or not experiencing pain or discomfort.

In some embodiments, the classification of step (IV') may be performed by computing a distance or similarity metric between the new input data-preferably after feature extraction and/or dimensionality reduction-and a representative point of one or more clusters previously identified as comprising statistically significant differences between individuals experiencing pain or discomfort and individuals in normal or no-pain conditions. The representative point may comprise or consist of any one of, but not limited to, the cluster centroid, the medoid, the mean or median of the data points within the cluster, or an embedding obtained from a prior transformation. In some embodiments, the measure of distance may comprise Euclidean distance, Manhattan distance, Mahalanobis distance, cosine similarity, or other learned or custom metrics, and the classification decision may be based on the proximity of the new input data to one or more of such representative points.

It is further noted that in some embodiments, the classification may be performed not only by measuring distance to pain or discomfort-related clusters, but also by evaluating the relative proximity to clusters representative of normal or non-pain conditions. For example, if the new data point lies closer to clusters associated with the pain group, it may be classified as pain-related, whereas if it lies closer to control clusters, it may be classified as not pain-related. In other embodiments, distance ratios, probabilistic assignment, or softmax-based likelihoods may be computed with respect to multiple clusters to generate confidence scores or to accommodate ambiguous cases. Additionally, in some embodiments, clusters with no statistically significant difference (i.e., neutral or irrelevant clusters) may be used as a reference for normalization, thresholding, or rejection regions, allowing the system to optionally classify the input as "uncertain" or "non-discriminative" when no meaningful match is found.

Advantageously, this fourth aspect of the invention provides an alternative and easier classification approach that does not require the training of a separate machine learning model. Instead, the classification is performed using the structure of previously validated clusters obtained via unsupervised methods, providing a direct connection between the input data and the statistical analysis carried out in the initial phase. This approach allows for more transparent decisions, easier traceability of the classification outcome, and faster deployment in scenarios where training a model is not feasible or desirable. Moreover, this method supports iterative refinement, as new clusters may be added or updated over time without retraining, and it can be especially useful in low-data regimes, novel domains, or personalized systems where adaptive classification based on prior clustering is advantageous.

A fifth aspect of the invention discloses a computer program, wherein the computer program comprises instructions which, when the program is executed by a computer, cause the computer to carry out the method of any one of the embodiments herein mentioned.

A sixth aspect of the invention discloses a computer readable storage medium comprising instructions that, when executed by a computer, cause said computer to carry out the method of any one of the embodiments herein mentioned.

A seventh aspect of the invention discloses a system comprising a processing unit in communication with a memory, the memory comprising instructions that, when executed by the processing unit, cause the system to carry out the method of any one of the embodiments herein mentioned.

An eighth aspect of the invention discloses a system for automatic determination of pain or discomfort-related facial expressions, the system comprising:
a) at least one receptacle suitable to fit an animal, wherein the receptacle comprises at least one lateral wall, a base, and, optionally, a top portion;
b) means to acquire one or more images and/or video, such as a camera, preferably an infrared camera;
c) preferably at least one source of light, preferably infrared light;
d) a processing unit in communication with a memory, the memory comprising instructions that, when executed by the processing unit, cause the system to carry out the method of any one of claims 1 to 7.

In some embodiments, the receptacle may comprise two, three or four lateral walls, preferably three, a base (bottom surface), and optionally a top portion or cover. Preferably, all or most of the lateral walls and the base, and optionally the top portion, are coated or constructed with light-absorbing, non-reflective material such as matte black acrylic, anodized aluminium, or coated polymers to minimize external reflections and light interference. In some embodiments, one of the lateral walls may be transparent or comprise a window made of transparent material, such as acrylic, polycarbonate, or glass, allowing unobstructed view for the camera. Alternatively, one of the lateral walls may be entirely open or may comprise an opaque material with an aperture or embedded camera integrated within the wall, allowing the optical axis of the camera to be oriented perpendicularly with respect to the receptacle. The top portion may be present or absent, and in some embodiments, it may comprise ventilation holes, additional infrared sources, or shielding elements to reduce ambient light.

It is further noted that the system may comprise a control unit in communication with a processing unit, wherein the processing unit and/or the control unit are in communication with a memory. The memory preferably comprises instructions which, when executed by the processing unit, cause the system to perform any one or more of the methods disclosed herein. The processing unit may be in direct communication with the means to acquire one or more images and/or video, such as a camera, and/or it may be in communication with a memory support (e.g., USB drive, SD card, or local server) comprising images or video obtained from said camera. In some embodiments, the processing unit may also be in communication with the infrared light source(s), allowing dynamic control of illumination intensity or activation timing. The system may optionally comprise multiple cameras oriented at different angles, or depth sensors (such as LiDAR or stereo vision systems), or microphones for capturing audio signals.

Advantageously, this eighth aspect of the invention provides an integrated hardware system designed to facilitate the automatic, standardized acquisition and processing of visual data for the detection of pain or discomfort-related facial expressions. The physical configuration of the receptacle ensures consistent and controlled environmental conditions for imaging, while the lighting, preferably infrared lighting, and means to acquire one or more images and/or video, such as a cameram setup enables high-resolution, low-interference facial capture even in low-light settings. By embedding or connecting a processing unit capable of executing the analytical methods of the invention, the system enables seamless, end-to-end automation-from image acquisition to classification-thereby improving the speed, accuracy, and scalability of pain or discomfort assessment in laboratory animals or other monitored subjects.

According to a preferred embodiment of the eighth aspect of the invention, the means to acquire one or more images and/or video, such as a camera, is positioned substantially horizontally with respect to enclosed receptacle, preferably wherein its optical axis is positioned perpendicular to at least one of the lateral walls.

In some embodiments, the means to acquire one or more images and/or video, preferably a camera, are positioned substantially horizontally with respect to the base of the receptacle, preferably with an angular deviation of no more than ±25°, more preferably ±15°, ±10°, ±5°, ±2°, with respect to a horizontal plane. The horizontal alignment allows optimal acquisition of the animal's face when the animal is facing forward, towards the camera. In preferred embodiments, the means to acquire one or more images and/or video or camera's optical axis is oriented perpendicularly to one of the lateral walls of the receptacle, such that when the animal positions itself facing said wall, the means to acquire one or more images and/or video or camera captures a frontal view of its face. This configuration facilitates consistent facial image capture across recordings and minimizes angular distortion or occlusion of key facial features.

It is further noted that in some embodiments, the wall towards which the means to acquire one or more images and/or video or camera is oriented may be open, transparent, or comprise a viewing window, or the means to acquire one or more images and/or video or camera may be embedded within the wall itself. In other embodiments, the means to acquire one or more images and/or video or camera may be mounted externally or internally, preferably at a fixed position aligned with the animal's expected gaze direction, optionally aided by environmental shaping or mild thermal attraction encouraging the animal to face forward. The use of infrared illumination ensures that the lighting conditions remain consistent and that the animal is not disturbed by visible light stimuli, furthermore it provides a comfortable warmth sensation, thereby increasing the likelihood of capturing usable, front-facing frames.

Advantageously, positioning the means to acquire one or more images and/or video or camera substantially horizontally and perpendicular to one of the lateral walls enables high-quality, reproducible frontal imaging of the animal's face, which is critical for accurate facial feature extraction and subsequent classification of pain or discomfort-related expressions. This configuration supports the automatic and standardized acquisition of facial data across individuals and sessions, reducing variability and increasing the reliability and objectivity of the analysis.

According to a preferred embodiment of the eighth aspect of the invention, the receptacle further comprises a support structure, preferably a grid, positioned above the base and configured to support the animal while allowing animal waste to pass through towards the base, and/or wherein the system comprises absorbent material, preferably sawdust, positioned on the base.

In some embodiments, the support structure positioned above the base comprises a grid or mesh made of metal, plastic, or composite material, preferably having a regular pattern of openings such as squares or rectangles with dimensions ranging, for example, from 0.3 cm² to 1 cm². The grid is configured to provide stable footing for the animal while allowing feces and urine to pass through, thereby preventing contamination of the imaging area and ensuring a cleaner environment for prolonged observation. The grid may be removable or fixed and may be supported by peripheral brackets or integrated into the receptacle structure. In some embodiments, the grid may further comprise anti-slip surface treatment or texture to enhance animal stability.

It is further noted that in some embodiments, the base of the receptacle, located below the support structure, comprises an absorbent material such as sawdust, paper bedding, absorbent pads, cellulose-based materials, or other bedding materials commonly used in laboratory animal housing. This absorbent layer may serve to collect and retain animal waste, control odor, and minimize reflections from the bottom surface that could interfere with optical acquisition. In other embodiments, the base may comprise a dark matte coating or non-reflective material to further reduce unwanted lighting artefacts in the recorded images.

Advantageously, this embodiment allows hygiene and optical cleanliness of the imaging environment while minimizing animal stress or behavioural disruption. By elevating the animal on a grid above the waste-collecting area, the system reduces variability in image background and helps maintain consistent recording conditions across sessions. This contributes to the overall standardization of the experimental setup, enhances image quality, and facilitates reliable automated analysis of facial expressions for the detection of pain or discomfort-related features.

According to a preferred embodiment of the eighth aspect of the invention, the system further comprises a microphone.

In some embodiments, the microphone may be configured to capture animal-generated vocalizations or environmental acoustic signals during the observation period. The microphone is preferably positioned within or near the receptacle, in a location that minimizes acoustic interference and maximizes signal-to-noise ratio. In some embodiments, the microphone is capable of capturing sounds in the ultrasonic range, such as frequencies above 20 kHz, which are particularly relevant in species such as rodents that emit ultrasonic vocalizations associated with pain, stress, discomfort, or social communication. Alternatively, the microphone may be a broadband or directional microphone, depending on the acoustic isolation and design of the system.

It is further noted that in some embodiments, the microphone is in communication with the processing unit or with a dedicated audio processing module, allowing real-time or retrospective feature extraction from the audio signal. The extracted features may include, but are not limited to, sound amplitude, pitch, duration, spectral characteristics, energy, and vocalization patterns. These acoustic features may then be analysed in combination with visual and/or physiological data to improve detection and classification of pain or discomfort-related biological expressions.

Advantageously, the inclusion of a microphone enables the audio, or preferably multimodal, assessment of animal welfare by incorporating acoustic cues alongside visual information. This enhances the robustness and sensitivity of the system in detecting pain or discomfort, especially in conditions where facial features are partially occluded, distorted, or not clearly visible. Moreover, this embodiment allows continuous, non-contact monitoring over extended periods and opens additional avenues for behavioural and emotional state analysis, contributing to a more comprehensive and objective assessment framework.

According to a preferred embodiment of the eighth aspect of the invention, the system further comprises a LiDAR.

In some embodiments, the system further comprises a LiDAR sensor, preferably configured to capture depth information or three-dimensional spatial data of the animal within the receptacle. The LiDAR may be positioned above, beside, or at an angle relative to the receptacle, and may operate using near-infrared laser pulses or other suitable wavelengths. The LiDAR system may comprise a single-point distance sensor, a scanning LiDAR, or a solid-state depth camera, and may acquire depth maps, point clouds, or range images of the animal and its posture over time.

It is further noted that in some embodiments, the LiDAR is in communication with the processing unit or with a dedicated depth processing module. The LiDAR-derived depth data may be used to extract features related to animal movement, body posture, orientation, breathing patterns, or facial surface geometry. These features may be analysed independently or fused with other input modalities-such as image, video, or sound-either during feature extraction, clustering, or classification. In particular, depth data may improve robustness in low-light or high-noise environments, and may be useful in detecting subtle movements or changes in facial contour associated with pain or discomfort.

Advantageously, the integration of a LiDAR sensor enhances the system's capability for multimodal analysis and three-dimensional perception, allowing for more detailed and accurate feature extraction, especially in dynamic or occluded scenes. It enables contactless monitoring of physiological and behavioural parameters not visible in standard 2D imaging, contributing to more comprehensive and objective pain or discomfort assessment. Furthermore, LiDAR information may assist in validating or refining facial expression analysis, tracking orientation, or excluding non-relevant frames based on animal pose, thus improving overall data quality and classification performance.

According to a preferred embodiment of the eighth aspect of the invention, the system further comprises a thermal camera, preferably configured to monitor body or facial surface temperature, which may serve as a physiological parameter indicative of physical, physiological or emotional states such as pain, stress, or inflammation.

According to a preferred embodiment of the eighth aspect of the invention, the system further comprises a device for capturing brain activity, preferably an electroencephalography (EEG) system, configured to record neural signals that may reflect pain, discomfort, stress or alertness.

According to a preferred embodiment of the eighth aspect of the invention, the system further comprises an eye-tracking device, preferably an infrared-based gaze tracker, configured to detect eye movements or pupil dilation, which may be used to infer states of attention, alertness, pain, or discomfort.

According to a preferred embodiment of the eighth aspect of the invention, the system further comprises a heart rate sensor, preferably a non-contact photoplethysmography (PPG) or infrared-based pulse detection device, configured to monitor changes in heart rate or heart rate variability as indicators of pain, stress, or arousal.

According to a preferred embodiment of the eighth aspect of the invention, the system further comprises a respiration monitoring device, preferably based on thermal or visual flow detection, configured to estimate respiratory rate or irregularities that may be associated with pain or discomfort.

According to a preferred embodiment of the eighth aspect of the invention, the system further comprises a blood oxygenation sensor, preferably a non-invasive pulse oximetry module, configured to monitor oxygen saturation levels as a physiological marker.

According to a preferred embodiment of the eighth aspect of the invention, the system further comprises an electromyography (EMG) device, preferably a non-contact or surface sensor, configured to capture muscle activity associated with facial or body movements that may reflect pain-related expressions.

According to a preferred embodiment of the eighth aspect of the invention, the system further comprises a galvanic skin response (GSR) sensor, preferably configured to measure skin conductivity or electrodermal activity as an indicator of autonomic arousal or stress.

According to a preferred embodiment of the eighth aspect of the invention, the system further comprises a motion tracking sensor, preferably an inertial measurement unit (IMU) or accelerometer, configured to monitor general movement or tremor levels as behavioral indicators.

According to a preferred embodiment of the eighth aspect of the invention, the system further comprises a sound classification module configured to detect and classify specific types of vocalizations or audible events, optionally using pretrained neural networks or heuristic models.

According to a preferred embodiment of the eighth aspect of the invention, the system further comprises a proximity or occupancy sensor configured to detect the position of the animal within the receptacle, which may be useful for triggering recordings or contextualizing detected signals.

According to a preferred embodiment of the eighth aspect of the invention, the system further comprises a humidity and/or temperature sensor positioned within the receptacle, preferably to monitor environmental conditions and ensure consistency or to correlate physiological responses with ambient parameters.

To enable a better understanding of the present disclosure, reference will now be made, by way of example only, to the accompanying schematic drawings. It is important to note that the following schematic drawings are provided solely as exemplary, non-limiting potential embodiments of the invention. Accordingly, the drawings are to be regarded as illustrative instead of restrictive, serving merely to aid in the explanation of the invention's principles and potential applications.

Figure 1 illustrates the latent space visualization of behavioural data extracted from video recordings of mice, using unsupervised dimensionality reduction. The representation of the latent space was obtained using UMAP from 10,566 frames corresponding to videos from 12 mice (7 with pain and 5 without pain). The visualization displays the distribution of the projected images in two dimensions, with representative frame examples overlaid to facilitate interpretation of the space structure.

Figure 2 illustrates a cluster-wise comparison of average feature values between pain and no-pain mouse groups. The mean values of behaviourally derived features grouped by cluster, comparing mice experiencing pain (dark bars) versus control mice without pain (light bars) are shown. Clusters were obtained by applying an unsupervised clustering algorithm (e.g., k-means or similar) to the latent space representation shown in Figure 1. Each bar represents the average score per cluster for each group, while individual data points overlaid on the bars correspond to values from each subject. The figure presents results for a configuration of 10 clusters; however, the analysis is systematically repeated across different cluster resolutions, ranging from 10 to 200 clusters, to ensure robustness.

Figure 3 illustrates the UMAP-based latent space representation of video frames in which the black dots indicate approximately 500 frames automatically selected by the clusterization procedure described above.

Figure 4 illustrates the percentage of facial pain expressions as a measure of pain at rest in mice subjected to transverse laparotomy or sham procedure, under different analgesic treatments: the subcutaneous administration of morphine (Morf, 0.5 mg/kg), ibuprofen (Ibu, 32 mg/kg), or saline (Sal), as a control. The pain scores were generated using a classifier trained using the frames selected by the procedure illustrated in Figures 2 and 3. Each bar and vertical line represents the mean ± SEM of the values obtained in 7-11 mice. Statistically significant differences are found between the values obtained in sham mice treated with solvent of the drugs (white bars) and the other experimental groups (*p < 0.05), and between the values obtained in laparotomized mice treated with saline (black bars) or the drugs tested (#p < 0.05) (one-way ANOVA followed by Student-Newman-Keuls test).

Figure 5 illustrates a schematic workflow representing a preferred embodiment of the invention for the automated identification of pain-related facial expressions. The figure outlines a sequential process beginning with the provision of a plurality of images or video data, typically acquired from experimental recordings of one or more individuals, such as laboratory animals. This input data is used to perform an unsupervised selection of pain-related facial expressions without the need for manual annotation of individual frames.

The core of the workflow is a machine learning-based algorithm comprising several processing stages. These stages include feature extraction from the images or video photograms-such as, but not limited to, extraction of facial landmarks, texture descriptors, or deep features using convolutional neural networks-followed by dimensionality reduction using, for example, principal component analysis (PCA), t-SNE, UMAP, or variational autoencoders. This reduced feature space is subjected to clustering with an unsupervised algorithm, preferably K-means, although other clustering techniques such as DBSCAN, hierarchical clustering, or Gaussian mixture models may be employed.

The clustering step is followed by an intra-cluster statistical comparison between groups of individuals experiencing pain or discomfort and those in normal or control conditions. This statistical comparison may be used to identify clusters that show a statistically significant overrepresentation of data points (such as frames or features) associated with pain-experiencing individuals, based on metrics such as group-level means, inter-individual variability, and dispersion-aware significance testing. Clusters passing this criterion can be designated as pain-related clusters.

The workflow then proceeds with the selection of images or data points from these pain-related clusters. These selected examples may serve as a training dataset for a subsequent machine learning model, preferably a supervised classification algorithm such as a convolutional neural network (CNN), support vector machine (SVM), or random forest, trained to distinguish pain-related from non-pain-related facial expressions. In some embodiments, multimodal or recurrent architectures (e.g., CNN-LSTM or transformer-based models) may be used to incorporate temporal dynamics or integrate additional modalities such as audio or physiological signals.

Finally, the trained algorithm may be employed to classify new, previously unseen input data-comprising images or video recordings-as pain-related or not. This classification can be performed in real-time or batch mode and may optionally be accompanied by confidence scores or temporal aggregation methods to improve robustness.

It is noted that the figure shows a preferred linear implementation of the method, but alternative workflows are contemplated. For example, the selection of pain-related clusters may be used directly, without training a secondary classifier, to evaluate new data points by measuring their distance to the centroid of known pain-related clusters in the feature space. Furthermore, some embodiments may use the selected clusters as pseudo-labels to bootstrap a weakly supervised training loop. The entire pipeline may be iterated or refined by integrating updated data, adapting to new species, or combining multimodal inputs for improved accuracy.

The figures provided are merely representational and may not be drawn to scale. Certain proportions thereof may be exaggerated, while others may be minimized. The figures are intended to illustrate various implementations of the invention that can be understood and appropriately carried out by those of ordinary skill in the art. Commonly designated elements among the various figures refer to common or equivalent elements in the depicted embodiments. The figures are not intended to be exhaustive or to limit the invention to the precise form disclosed. It should be understood that the invention can be practiced with modification and alteration, and that the invention be limited only by the claims and the equivalents thereof.

### Examples

### Materials and Methods

### Experimental Animals

The experiments were performed in CD-1 mice (Charles River, Barcelona, Spain) weighing 25-32 g (8-11 weeks old). Mice were housed in colony cages (10 per cage) in a temperature-controlled room (22 ± 2 ∘C) with an automatic 12-h light/dark cycle (08:00-20:00). An igloo and plastic tunnel were placed in each cage for environmental enrichment. The mice were fed a standard laboratory diet and had free access to tap water until the beginning of the experiments.

The behavioral tests were performed during the light phase (9:00-15:00). Testing was conducted at random times throughout the estrous cycle. The mice were handled in accordance with international standards (European Communities Council directive 2010/63), and the experimental protocols were approved by regional (Junta de Andalucia) and institutional (Research Ethics Committee of the University of Granada) authorities.

### Surgical procedure to model postoperative pain

We used an experimental laparotomy to model postoperative pain. Briefly, mice were anesthetized with 3.5% isoflurane (IsoVet^{®}, B. Braun, Barcelona, Spain) in oxygen using an induction chamber. Then, anesthesia was maintained with 3% isoflurane delivered via a nose cone during the procedure. The mice were placed in a supine position to shave the abdominal area. Then, skin was prepared in a sterile manner with 70% alcohol solution followed by 10% povidone-iodine solution. Experiments were performed in mice with a transverse laparotomy which consisted of a 1.5 cm incision through the skin and muscle of the lower abdominal area, perpendicular to the midline, using surgical scissors. The surgical wound was stretched to expose the viscera and distend the damaged tissue. We perform single knot sutures to close the muscle and horizontal mattress sutures to close the skin. Sutures were done with Supramid^{®} 5/0 non-absorbable polyamide multifilament thread using a TB15-CT 19-mm needle (Laboratorio Aragó, Barcelona, Spain). The sham procedure involved anesthesia, shaving and sterile preparation of the abdomen, with no incision.

### Drug administration

We used the opioid agonist morphine hydrochloride (0.5 mg/kg; Biogen, Madrid, Spain) and ibuprofen (32 mg/kg; Sigma-Aldrich, Madrid, Spain), as standard analgesics. Both drugs were dissolved in sterile physiological saline (0.9% NaCl) and injected subcutaneously (s.c.) into the interscapular region in a volume of 5 mL/kg. Evaluation of drug effects was done in the immediate postoperative period, specifically at 3.5 h after surgery.

### Procedure for video recording and initial processing of the recordings

Mice were recorded in custom-made test compartments using Kuman RPi cameras (USA). Before the analysis of the facial pain expressions, we used a trained Resnet 50 network that recognizes key facial landmarks (the ears, the eyes, and the nose of the animal), to select only the frames where the animal is facing at the camera with high confidence (>0.9). We later applied a geometric normalization procedure to compensate for head tilt to ensure that all images presented a standardized orientation, with the eyes aligned horizontally.

### Automated classification of pain faces

Using the previously mentioned Resnet50 network we obtained 4,558 images of mice facing at the camera from 7 new video-recordings of laparotomized animals, and 6,008 images from 5 new video-recordings of control mice, ensuring that there was an interval between each image of at least 1 seconds (to avoid the use of virtually identical consecutive images).

Facial features were extracted from video frames using the initial layers of a convolutional neural network pretrained on the ImageNet dataset. In the current implementation, the ResNet-50 architecture was used, as it has been shown to be effective in capturing high-level visual features relevant for facial detail identification. This is the same architecture used previously for facial landmark localization (as mentioned in the section above), but in this step, it provided a feature vector of the entire image rather than a heatmap of key points. This process enabled the abstraction of visual information into a feature space representing the animals' facial expressions.

The extracted features were subjected to principal component analysis (PCA) to reduce dimensionality, preserving 99% of the variance in the original data. This step optimized system performance by lowering computational load while retaining essential information for detecting relevant facial expressions. The reduced features were clustered using the K-means algorithm. To determine the optimal configuration, different numbers of clusters (ranging from 10 to 200) were tested. This process grouped the frames based on facial similarity, allowing for the identification of common expression patterns. Within each cluster, images were labeled according to their origin (pain or no pain). Statistical analyses were then conducted to identify significant differences in frame distribution between the two groups.

To avoid bias from individual-specific responses, the number of frames per animal within each cluster was compared, and only those clusters showing statistically significant differences (p < 0.025) between pain and no-pain groups were selected. For each clustering configuration (from 10 to 200), clusters meeting statistical criteria were considered representative of pain-related facial expressions. A "pain ratio" was then computed for images within these clusters, defined as the proportion of pain-related images to non-pain images (pain ratio > 0.5 indicated a predominance of pain-related expressions in that cluster). Frames with a pain ratio > 0.5 were automatically selected as visual examples of pain, without manual intervention.

The complete set of labeled images (pain vs. no pain), selected automatically using the procedure described in the preceding paragraphs (rather than by manual selection, as in other previously published procedures), was used to train a convolutional neural network based on Google's InceptionV3 model, which is able to process and score new video recordings.

All scripts for ResNet-50 and InceptionV3 were written in Python (v3.5). Network training and video evaluation were performed remotely on a computer running Ubuntu Linux, equipped with an NVIDIA 2080Ti GPU.

### Results

The analysis of behavioral video data using unsupervised dimensionality reduction revealed a structured distribution of facial expression features in mice. As shown in Figure 1, the UMAP projection of 10,566 video frames from 12 animals (7 experiencing pain and 5 control animals) captured the latent structure of facial behavior. This two-dimensional representation allowed for a visual distinction between frames. Representative images are overlaid at various points in the latent space to visually contextualize regions and to aid in interpreting the behavioral significance of point distribution.

To further explore the structure of the latent space, unsupervised clustering was applied, enabling the identification of groups of frames with similar facial features. Figure 2 shows a comparison of cluster-wise average feature values between pain and no-pain groups, using a configuration of 10 clusters as an example. Dark bars represent pain-expressing mice, while light bars denote controls. Individual subject values are shown as overlaid points. This analysis was systematically repeated for cluster resolutions ranging from 10 to 200 clusters to ensure the robustness of the grouping strategy. Only clusters of facial features showing a statistically significant difference between animals with and without pain were selected. These differences indicate that certain behavioral patterns-captured in specific clusters-are more prevalent or expressed differently depending on the animal's pain state. The clustering thus reveals discrete behavioral modules that serve as potential biomarkers. A subset of approximately 500 frames identified as statistically relevant for pain classification was automatically selected from the clustering results, as depicted in Figure 3 (see black circles). The automatically selected frames (black circles) are distributed across the latent space, capturing a specific subset of the entire behavioral repertoire observed in the data. Then, these frames selected using the automated procedure described above, served as training data for the neural network to build a pain classifier that can be used in subsequent analyses.

To test the feasibility of the classifier trained on this refined dataset, we evaluated pain expression levels in recordings from mice subjected to laparotomy or sham procedure. As presented in Figure 4, the percentage of frames showing facial pain expressions was significantly higher in laparotomized mice (black bar) than in sham animals (white bar). We also tested the effects of two standard analgesics that are used to treat postoperative pain in human patients: the opioid morphine and the nonsteroidal antiinflammatory drug ibuprofen. Laparatomized animals treated with any of these analgesics showed a significant decrease in pain-like facial expressions (striped and crosshatch bars) in comparison to laparatomized animals not treated with analgesics (black bar), reaching values similar to control sham animals (white bar). These results validate the classifier's ability to distinguish pain-related facial expressions and its sensitivity to analgesic effects.

The workflow for the automatic selection of pain-related signals from mouse recordings, and their use for training a machine learning algorithm for the identification of such signals in a new recording is shown in Figure 5.

### Conclusion

Our system and methods for automatic classification of biological signals or expressions enabled the extraction of a representative subset of frames that captured pain-specific expressions without manual annotation. These data were successfully used to train a classifier capable of quantifying pain intensity in new animals, providing a sensitive and objective method for behavioral pain assessment. The system accurately detected differences in facial expressions among animals subjected to postoperative pain and responded appropriately to pharmacological modulation by clinically relevant analgesics such as morphine and ibuprofen.

Overall, the proposed framework offers a robust, automated, and scalable solution for the analysis of pain-related facial expressions in preclinical research. It holds significant potential for reducing subjectivity and labor-intensive scoring procedures in animal studies, contributing to the refinement of pain measurement methodologies and the advancement of welfare-oriented experimental protocols.

## Claims

1. A computer implemented method for identifying pain or discomfort related biological signals or expressions in a plurality of human or animal individuals, wherein said plurality of individuals comprise a first group comprising one or more individuals experiencing pain or discomfort and a second group comprising one or more individuals in normal conditions or not experiencing pain or discomfort, the method comprising the steps of:
a) performing feature extraction on input data, wherein the input data comprises image, video, audio and/or physiological signals;
b) reducing the dimensionality of data associated to the extracted features in step (a) with a dimensionality reduction algorithm;
c) clustering the data of step (b) with a clustering algorithm;
d) for each cluster obtained in step (c):
i. computing the number of data points associated to each individual;
ii. computing a first representative value of the number of data points per individual associated to the first group, and a second representative value of the number of data points per individual associated to the second group;
iii. computing a statistical measurement of data point dispersion in the first and second representative values;
iv. comparing the first and second representative values associated to the first and second groups, evaluating the statistical significance of said comparison by taking in consideration the dispersion computed in step (iii);
e) identifying pain or discomfort-related biological signals or expressions by selecting clusters that comprise a statistically significant difference between the first and second representative values.

2. The computer implemented method for identifying pain-related biological signals or expressions according to claim 1, wherein the clustering is made a plurality of iterations, each iteration for a different number of clusters.

3. The computer implemented method for identifying pain or discomfort-related biological signals or expressions according to claim 1 or 2, wherein the input data comprises one or more images and/or video, and the features extracted comprise facial features.

4. The computer implemented method for identifying pain or discomfort-related biological signals or expressions according to any one of the previous claims, wherein the input data comprises animal-generated sounds, and the features extracted comprise animal-generated sound features.

5. A computer implemented method for training a machine learning algorithm for classifying biological signals or expressions as pain or discomfort-related, comprising the steps of:
I. identifying pain or discomfort-related biological signals or expressions in a plurality of human or animal individuals according to any one of the previous claims;
II. training a machine learning algorithm with data associated to the pain or discomfort-related biological signals or expressions identified in step (a).

6. A computer implemented method for classifying biological signals or expressions as pain or discomfort-related or not pain or discomfort-related, comprising the steps of:
III. training a machine learning algorithm for classifying biological signals or expressions as pain or discomfort-related according to claim 5;
IV. providing new input data comprising image, video, audio and/or physiological signals to the machine learning algorithm trained in step (III) for classification.

7. A computer implemented method for classifying biological signals or expressions as pain or discomfort-related or not pain or discomfort-related, comprising the steps of:
I'. identifying pain or discomfort-related biological signals or expressions in a plurality of human or animal individuals according to any one of claims 1 to 4;
II'. performing feature extraction on new input data, the new input data comprising image, video, audio and/or physiological signals;
III'. reducing the dimensionality of data associated to the extracted features in step (II') with a dimensionality reduction algorithm;
IV'. classifying the new input data as pain or discomfort-related or not pain or discomfort-related as a function of a measure of distance between the dimensionality-reduced data of step (III') and a representative point of one or more clusters that comprise a statistically significant difference in the number of data points associated to an individual experiencing pain or discomfort and the number of data points associated to an individual in normal conditions or not experiencing pain or discomfort.

8. A computer program comprising instructions which, when the program is executed by a computer, cause the computer to carry out the method of any one of claims 1 to 7.

9. A computer readable storage medium comprising instructions that, when executed by a computer, cause said computer to carry out the method of any one of claims 1 to 7

10. A system comprising a processing unit in communication with a memory, the memory comprising instructions that, when executed by the processing unit, cause the system to carry out the method of any one of claims 1 to 7.

11. A system for automatic determination of pain or discomfort-related facial expressions comprising:
a) at least one receptacle suitable to fit an animal, wherein the receptacle comprises at least one lateral wall, a base, and, optionally, a top portion;
b) means to acquire one or more images and/or video, preferably an infrared camera;
c) at least one source of light, preferably infrared light;
d) a processing unit in communication with a memory, the memory comprising instructions that, when executed by the processing unit, cause the system to carry out the method of any one of claims 1 to 7.

12. The system according to claim 11, wherein the means to acquire one or more images or video is positioned substantially horizontally with respect to enclosed receptacle, preferably wherein its optical axis is positioned perpendicular to at least one of the lateral walls.

13. The system according to claim 11 or 12, wherein said receptacle further comprises a support structure, preferably a grid, positioned above the base and configured to support the animal while allowing animal waste to pass through towards the base, and/or wherein the system comprises absorbent material, preferably sawdust, positioned on the base.

14. The system according to any one of claims 11 to 13, further comprising a microphone.

15. The system according to any one of claims 11 to 14, further comprising a LiDAR.
